# EUROPÄISCHE PATENTANMELDUNG

(11) **EP 4 794 272 A2**
(43) Veröffentlichungstag der Anmeldung: **19.08.2026**
(21) Anmeldenummer: 26189908.2
(22) Anmeldetag: 09.03.2021
(51) Int. Cl.: H04L 12/10

(54) **BUSSYSTEM UND TRAGEVORRICHTUNG MIT EINEM SOLCHEN BUSSYSTEM**

(62) Dokumentnummer(n) der früheren Anmeldung(en) nach Art. 76 EPÜ: 21712730.7 / 4 305 813
(71) Anmelder: VusionGroup GmbH, 8072 Fernitz-Mellach (AT)
(72) Erfinder: RÖSSL, Andreas, 8072 FERNITZ-MELLACH (AT)
(74) Vertreter: Plasseraud IP

(57) **Zusammenfassung**

Bussystem, insbesondere Regalschienen-Bussystem, das aufweist eine erste Leitung zur Festlegung eines elektrischen Bezugspotentials, eine zweite Leitung zur Bereitstellung einer Versorgungsspannung mit einem Soll-Wert gegenüber dem Bezugspotential, zumindest eine dritte Leitung, bevorzugt eine einzige dritte Leitung, zur Kommunikation von Signalen und/oder Daten, eine Versorgungseinrichtung, die mit den Leitungen elektrisch leitend verbunden ist und zur elektrischen Leistungs-Versorgung wie auch zur Kommunikations-Versorgung von elektronischen Geräten, die an das Bussystem anschließbar sind, ausgebildet ist, wobei die Versorgungseinrichtung dazu ausgebildet ist, unterschiedliche Gerätearten sowohl mit elektrischer Leistung als auch, insbesondere geräteartspezifisch, kommunikationstechnisch zu versorgen.

## Beschreibung

### Technisches Feld

Die Erfindung betrifft ein Bussystem mit Leitungen und einer Versorgungseinrichtung zur Versorgung von Geräten mit elektrischer Leistung und zur kommunikationstechnischen Versorgung dieser Geräte, bussystemkompatible Geräte und eine Tragevorrichtung mit einem solchen Bussystem.

### Hintergrund

Die WO 2017/153481 A1 offenbart eine Tragevorrichtung in Form einer Regalschiene, die einen Grundträger aufweist, der zur mechanischen Befestigung einer elektronischen Anzeigeeinheit ausgebildet ist. Der Grundträger begrenzt einen Aufnahmebereich zum Aufnehmen der Anzeigeeinheit mit drei in U-Form angeordneten Seitenwänden. Der Aufnahmebereich ist hier also dreiseitig begrenzt und die Anzeigeeinheit lässt sich über die freigelassene Seite der U-Form von vorne her in die Regalschiene einsetzen bzw. von dort entnehmen.

Eine erste, zentrale Seitenwand ist durch eine Platte gebildet. Diese Platte dient als Referenz.- bzw. Positionierung-Ebene, an der die Anzeigeeinheit mit ihrer Rückwand an der Regalschiene positionierbar ist. Die Platte weist im Raster angeordnete Durchlässe auf. Diese Durchlässe dienen zur Kontaktierung von elektrischen Leiterbahnen durch Kontakt-Pins der Anzeigeeinheit, um die Anzeigeeinheit elektrisch zu versorgen. Die Leiterbahnen sind auf einem Leitungsträger angeordnet, der an jener von dem Aufnahmebereich abgewandten Seite der ersten Seitenwand positioniert ist.

Die Tragevorrichtung weist auch eine Versorgungseinrichtung auf, welche die Anzeigeeinheit sowohl kommunikationstechnisch als auch mit elektrischer Leistung versorgt. Die Versorgungseinrichtung ist mit den Leiterbahnen elektrisch leitend verbunden, trägt die für den Batteriebetrieb nötigen Batterien und ist hinter dem Leitungsträger angeordnet. Ein Bussystem für diese Tragevorrichtung ist hier durch die Kombination aus Versorgungseinrichtung und Leiterbahnen gebildet.

Dieses Bussystem ist ausschließlich für den Betrieb mit einer einzigen Geräteart, nämlich den Anzeigeeinheiten, die Bildschirme mit einem extrem niedrigen Energiebedarf aufweisen, was beispielsweise durch den Einsatz von "electronic ink" Technologie ermöglicht ist, konzipiert.

Die Erfindung hat sich vor diesem Hintergrund die Aufgabe gestellt, ein verbessertes Bussystem bereitzustellen.

### Zusammenfassung der Erfindung

Diese Aufgabe wird durch ein Bussystem gelöst. Der Gegenstand der Erfindung ist daher ein Bussystem, insbesondere Regalschienen-Bussystem, das aufweist: eine erste Leitung zur Festlegung eines elektrischen Bezugspotentials, eine zweite Leitung zur Bereitstellung einer Versorgungsspannung mit einem Soll-Wert gegenüber dem Bezugspotential, zumindest eine dritte Leitung, bevorzugt eine einzige dritte Leitung, zur Kommunikation von Signalen und/oder Daten, und eine Versorgungseinrichtung, die mit den Leitungen elektrisch leitend verbunden ist und zur elektrischen Leistungs-Versorgung wie auch zur Kommunikations-Versorgung von elektronischen Geräten, die an das Bussystem anschließbar sind, ausgebildet ist, wobei die Versorgungseinrichtung dazu ausgebildet ist, unterschiedliche Gerätearten sowohl mit elektrischer Leistung als auch nach ihrer Identifikation geräteartspezifisch kommunikationstechnisch zu versorgen.

Weiterhin wird diese Aufgabe durch ein elektronisches Gerät gelöst. Der Gegenstand der Erfindung ist daher ein elektronisches Gerät, welches Gerät ein Bus-Interface aufweist, das zur Verbindung mit Leitungen eines Bussystems ausgebildet ist, wobei das Bussystem aufweist: eine erste Leitung zur Festlegung eines elektrischen Bezugspotentials, eine zweite Leitung zur Bereitstellung einer Versorgungsspannung gegenüber dem Bezugspotential, zumindest eine dritte Leitung, bevorzugt eine einzige dritte Leitung, zur Kommunikation von Signalen und/oder Daten, und eine Versorgungseinrichtung, die mit den Leitungen elektrisch leitend verbunden ist und zur elektrischen Leistungs-Versorgung wie auch zur Kommunikations-Versorgung von elektronischen Geräten, die an das Bussystem anschließbar sind, ausgebildet ist, wobei das Gerät zu seiner Identifikation gegenüber der Versorgungseinrichtung zwecks nachfolgender geräteartspezifischer Kommunikation mit der Versorgungseinrichtung ausgebildet ist.

Weiterhin wird diese Aufgabe durch eine Tragevorrichtung gelöst. Der Gegenstand der Erfindung ist daher ein Tragevorrichtung, bevorzugt eine Regalschiene, die ein erfindungsgemäßes Bussystem aufweist.

Mit den erfindungsgemäßen Maßnahmen geht der Vorteil einher, dass in Abkehr von dem bekannten Bussystem nun Geräte unterschiedlichster Art an der Tragevorrichtung betrieben werden können. Dies ermöglicht eine wesentlich flexiblere Bestückung der Tragevorrichtung mit Geräten, die sich hinsichtlich ihrer Art (also z.B. durch die Geräteklasse) unterscheiden lassen, wie z.B. elektronische Anzeigeeinheiten, Sensoreinheiten, Eingabeeinheiten oder auch Bilderfassungseinheiten usw. somit kann die Funktionalität der Tragevorrichtung de facto beliebig erweitert werden oder auch an individuelle Bedürfnisse angepasst werden.

Geräte unterschiedlichster Art können jedoch auch innerhalb einer Geräteklasse gegeben sein, wie z.B. der Gerätklasse elektronische Anzeigeeinheiten. Diese Anzeigeeinheiten können sich hinsichtlich ihrer Art durch die Bildschirmdiagonale oder auch durch die Anzahl der Pixel oder den Umfang der darstellbaren Farben wie auch durch die verwendete Technologie (elektrophoretisch, OLED oder LCD usw.) usw. unterscheiden. Ähnlich verhält es sich mit der Geräteklasse der Bilderfassungseinheiten. Diese Bilderfassungseinheiten können sich hinsichtlich der Art des Ergebnisses ihrer Bilderfassung, nämlich Standbild oder Video-Stream oder auch hinsichtlich der Auflösung oder auch des Spektralbereichs usw. unterscheiden. All diese Unterschiede innerhalb einer Gerätklasse können eine geräteartspezifische Ansteuerung bzw. Kommunikation erforderlich machen, um die unterschiedlichsten Funktionalitäten optimal nutzen zu können.

Die Einsetzbarkeit von Geräten unterschiedlicher Art wird konkret durch zweierlei Maßnahmen erhalten, die ineinandergreifen.

Die erste Maßnahme ist dadurch gegeben, dass die Versorgungseinrichtung dazu ausgebildet ist, mit unterschiedlichen Gerätearten, insbesondere geräteartspezifisch, zu kommunizieren. Dies kann durch eine Speicherung von flexibel abrufbaren bzw. einsetzbaren kommunikationstechnischen Parametrisierungen, wie etwa Kommunikationsprotokolle und/oder Befehlssätze, für unterschiedliche Gerätearten realisiert sein. Dabei können diese kommunikationstechnischen Parametrisierungen z.B. in der Versorgungseinrichtung vorab gespeichert sein oder bedarfsorientiert von einem Geräte-Verwaltungsserver durch die Versorgungseinrichtung abrufbar sein. Auch könnte diese kommunikationstechnische Parametrisierung direkt von dem betreffenden elektronischen Gerät bereitgestellt werden. Auch kann vorgesehen sein, dass die Bereitstellung der Versorgungsspannung bzw. der Versorgungsleistung durch die Versorgungseinrichtung geräteartspezifisch angepasst wird.

Die zweite Maßnahme ist dadurch gegeben, dass jedes Gerät, bevor es für eine geräteartspezifische Kommunikation mit der Versorgungseinrichtung einsetzbar ist, zu seiner, insbesondere geräteartübergreifenden bzw. geräteartunabhängigen, Identifikation gegenüber der Versorgungseinrichtung ausgebildet ist, worauf nachfolgend noch im Detail, insbesondere im Zusammenhang mit der Erfassung von Identifikationsdaten durch die Versorgungseinrichtung wie auch der Abgabe der Identifikationsdaten durch das elektronische Gerät, eingegangen ist. Bei dieser geräteartunabhängigen Identifikation werden besagte Identifikationsdaten übermittelt, die in Folge eine geräteartspezifische Kommunikation zwischen der Versorgungseinrichtung und dem jeweiligen Gerät ermöglichen.

Weitere, besonders vorteilhafte Ausgestaltungen und Weiterbildungen der Erfindung ergeben sich aus den abhängigen Ansprüchen sowie der nachfolgenden Beschreibung.

Im Folgenden ist auf Details des Aufbaus der Kommunikation wie auch der Kommunikationsabwicklung im Bussystem eingegangen.

Einer dieser Aspekte betrifft die Einleitung einer Änderung eines Betriebszustands bzw. -modus. Hierbei hat es ich als vorteilhaft erwiesen, dass die Versorgungseinrichtung zur temporären Veränderung der Versorgungspannung ausgebildet ist, um eine Veränderung eines Betriebsmodus einzuleiten. Auf der Seite des elektronischen Geräts ist vorgesehen, dass das Gerät eine Detektionsstufe aufweist, die zur Detektion einer temporären Veränderung der Versorgungsspannung ausgebildet ist, und dass das Gerät bei einer solchen Detektion zum Verändern seines Betriebsmodus ausgebildet ist.

Mit diesen Maßnahmen geht der Vorteil einher, dass im Unterschied zu bekannten Bussystemen die Signalisierung von einer Änderung des Betriebsmodus nicht mehr zwangsweise über speziell dafür vorgesehene, separate Signal- bzw. Daten-Leitungen erfolgen muss. Vielmehr wird die für die elektrische Leistungsversorgung vorgesehene Leitung ohne Verwendung der für die Signal- und/oder Daten-Kommunikation vorgesehene mindestens eine dritte Leitung benützt. Daher ist es auch nicht notwendig, dass die am Bus angeschlossenen Geräte zum Zeitpunkt der Einleitung der Veränderung des Betriebszustands in einem synchronen Zustand mit der Versorgungseinrichtung sind. Vielmehr kann sich jedes Gerät in einem beliebigen, gerätespezifischen Betriebsmodus befinden, wie etwa einem Schlaf- oder Ruhemodus mit geringer bis im Wesentlichen keiner Leistungsaufnahme oder auch einem Verarbeitungs- bzw. Aktivmodus, in dem eine autonome Verarbeitung von Information, Signalen und/oder Daten im Gerät erfolgt. Gleiches gilt im Übrigen auch für die Versorgungseinrichtung. Dass nun eine Veränderung eines Betriebsmodus eingeleitet wird oder zumindest auf der Seite der Versorgungseinrichtung bereits eingeleitet wurde, wird von der Versorgungseinrichtung mit Hilfe einer temporären Veränderung der Versorgungsspannung an die mit dem Bussystem verbundenen elektronischen Geräte signalisiert bzw. kommuniziert und dort detektiert und ggf. auch umgesetzt.

Dabei kann es sich bei der Veränderung eines Betriebsmodus ausschließlich um eine Veränderung des Versorgungseinrichtung-Betriebsmodus handeln. In diesem Fall wird diese Versorgungseinrichtung-Betriebsmodus-Veränderung den anderen Geräten einfach nur mitgeteilt, um die Geräte darüber zu informieren. Die so informierten Geräte können in ihrem eigenen Betriebsmodus-Schema verharren und müssen grundsätzlich in keiner Weise nach außen hin reagieren bzw. eine Reaktion zeigen.

Bei der Veränderung eines Betriebsmodus kann es sich jedoch auch um eine durch die Versorgungseinrichtung angestrebte Veränderung eines Geräte-Betriebsmodus handeln, die z.B. unberührt vom jeweiligen gerade vorliegenden Versorgungseinrichtung-Betriebsmodus bei den Geräten einzuleiten ist. In diesem Fall wird die Notwendigkeit der Geräte-Betriebsmodus-Veränderung den Geräten mitgeteilt, dort detektiert und auch umgesetzt.

Bei der Veränderung eines Betriebsmodus kann es sich jedoch auch um eine gemeinschaftliche Veränderung des Versorgungseinrichtung-Betriebsmodus und des Geräte-Betriebsmodus handeln. In diesem Fall wird die Notwendigkeit einer Veränderung des Betriebsmodus sozusagen mit bussystemweiter Gültigkeit signalisiert bzw. kommuniziert und alle mit dem Bussystem verbundenen Geräte folgen dieser Aufforderung durch die Versorgungseinrichtung und leiten die Veränderung ihres Geräte-Betriebsmodus ein, um z.B. mit dem ebenfalls eingeleiteten Versorgungseinrichtung-Betriebsmodus im Einklang zu sein. Dies kann auch als Synchronisierung der gerade vorliegenden gerätespezifischen Betriebsmodi zwischen der Versorgungseinrichtung und den am Bussystem angeschlossenen Geräten verstanden werden.

Diese Maßnahmen unterstützt die Flexibilität des Bussystems, eine schier beliebige Vielfalt von unterschiedlichen Geräten. bzw. Gerätearten mit dem Bussystem zu betreiben und anzusteuern, und zwar in erster Lienen ohne die zwingende Notwendigkeit, auf spezielle Kommunikationsprotokolle oder Funktionseigenschaften der individuellen Geräte Rücksicht nehmen zu müssen. Im krassen Gegensatz zu bekannten Maßnahmen, bei denen eine Betriebsmodus-Veränderung durch eine Datenkommunikation gemäß einem auf die an das Bussystem angeschlossenen Geräte abgestimmten Kommunikationsprotokoll kommuniziert werden muss, macht sich die Erfindung jene Leitungen des Bussystems zunutze, die gewöhnlich nur für die elektrische Versorgung vorgesehen sind, und zeigt durch eine temporäre Veränderung der Versorgungsspannung den an das Bussystem angeschlossenen Geräten an, dass eine Betriebsmodus-Veränderung einzuleiten ist.

Dies erlaubt auch erstmals den Einsatz von Geräten am Bussystem, die elektronisch (schaltungstechnisch) so ausgebildet sein können, dass sie von der zumindest einen dritten Leitung entkoppelt bzw. getrennt sind, wobei sie trotzdem mit elektrischer Leistung über die erste und die zweite Leitung versorgt werden. Trotz der Entkopplung von der zumindest einen dritten Leitung, blieben die am Bussystem angeschlossenen Gerät für die Versorgungseinrichtung kommunikationstechnisch bzw. signaltechnisch erreichbar und sie können mit einer "Basisinformation" versorgt werden, wie im vorliegenden Kontext der Steuer-Information, dass eine Veränderung des Betriebsmodus einzuleiten ist.

Die zuvor schon angesprochene Vielzahl der unterschiedlichen Geräte kann ohne Anspruch auf eine abschließende Aufzählung eine Basisfunktionalität oder Basisausbildung umfassen: Sensoren wie z.B. Temperatursensoren oder Annäherungssensoren usw., Kameras für Standbildaufnahme oder Videoaufnahme oder Infrarotaufnahmen; Eingabegeräte wie z.B. Einzeltasten oder Tastenfelder oder Drehknöpfe bzw. Drehregler oder auch Touch-Screens; Anzeigeeinheiten wie z.B. eine oder mehrere Light Emitting Diodes (LEDs), Videoscreens oder auch elektronische Regalanzeigen mit energiesparenden bistabilen Bildschirmtechnologien wie z.B. Electronic Ink oder E-Paper oder aktive Bildschirmtechnologien wie etwa Liquid Cristal Display (LCD) oder Organic Light Emitting Diodes (OLED) usw.

Alle diese unterschiedlichen Geräte sind kompatibel mit dem Bussystem der Tragevorrichtung ausgebildet, um an das Bussystem angeschlossen zu werden und dort verwendet zu werden.

Die zuvor erwähnten Geräte weisen also im Wesentlichen eine Basisfunktionalität auf. Solche Geräte können jedoch auch kombinierte Basisfunktionalitäten aufweisen oder eine dominierende Basisfunktionalität ergänzt um weitere unterstützende Funktionen bereitstellen. So können diese Geräte auch weitere, ergänzende Kommunikation-Funktionalitäten bereitstellen, wie z.B. ein NFC-Interface zur Geräteaktivierung, zur Datenübertragung von und zu dem Gerät oder auch Steuerung von Funktionen des Geräts aus unmittelbarer Nähe (einige Millimeter bis einige Zentimeter) oder auch zur Herstellung einer Bindung zwischen einem Produkt und dem elektronischen Gerät oder ein Bluetooth-Low-Energy Funkmodul zur Funk-Kommunikation über weitere Distanzen mit kompatiblen Vorrichtungen.

Jedes dieser Geräte weist eine Geräte-Elektronik auf, die strukturell wie auch funktional in unterschiedliche Schaltungsblöcke aufgeteilt werden kann. So kann die Geräte-Elektronik zumindest einen Schaltungsblock für die jeweilige Basisfunktionalität, ggf. auch einen Schaltungsblock für die Zusatzfunktionalität, einen Schaltungsblock für die Energieversorgung und zumindest einen Schaltungsblock für die Ankopplung an das Bussystem, ggf. aufgetrennt in Ankopplung an die zumindest eine dritte Leitung einerseits und Ankopplung an die zweite Leitung andererseits, aufweisen.

Je nach Kontext, in dem das Bussystem zur Anwendung kommt, können der Versorgungseinrichtung unterschiedliche Aufgaben bzw. Rollen zukommen.

Eine dieser Rollen besteht in der grundlegenden Aufgabe der elektrischen Versorgung der an dem Bussystem angeschlossenen Geräte. Zu diesem Zweck kann die Versorgungseinrichtung selbst mit Hilfe eines lokalen oder zentralen Netzgeräts elektrisch versorgt werden oder auch über Funk, wie z.B. unter Anwendung der Power-over-WiFi Technologie, versorgt werden. Auch kann die Versorgungseinrichtung an eine ihr zugeordnete (wieder aufladbare) Batterie angeschlossen sein, aus der sie die elektrische Leistung für ihren eigene Betrieb wie auch für den Betrieb der an das Bussystem angeschlossenen Geräte bezieht.

Eine weitere Rolle besteht darin, unter Zuhilfenahme der Versorgungsspannung eine Veränderung eines Betriebsmodus einzuleiten. Dies kann z.B. bei einem Einsatz der Versorgungseinrichtung als Regalschienen-Controller an einer Regalschiene, welche die Leitungen trägt, z.B. dann nötig sein, wenn eine zentrale Verwaltungsinstanz (z.B. ein Clouddienst oder ein lokaler Server, wo eine Verwaltungssoftware - auch als übergeordnete "Software Entity" bezeichnet - zum Verwalten von elektronischen Geräten, die an der Regalschiene befestigt sind, ausgeführt wird) die einzelnen Geräte an der Regalschiene identifizieren muss, deren Daten abrufen oder auch ansteuern bzw. mit Daten versorgen muss. Hierbei kann die Versorgungseinrichtung auch schon im Vorfeld zur tatsächlichen Kommunikation mit der zentralen Verwaltungsinstanz proaktiv die Erfassung der an der Regalschiene installierten Geräte durchführt, die so erfassten Identifikationsdaten speichern und diese erst zu einem späteren Zeitpunkt an die zentrale Verwaltungsinstanz abgeben.

Der Clouddienst ist über das Internet mit einer lokalen LAN- oder WLAN-Infrastruktur verbunden, wobei in dieser Infrastruktur ein oder mehrere Access-Points die Verbindung mit den Versorgungseinrichtungen bereitstellen.

Auch der lokale Server kann über eine LAN- bzw. WLAN-Infrastruktur mit solchen Access-Points verbunden sein.

Jeder Access-Point kann dazu ausgebildet sein, über eine Funkverbindung mit der Versorgungseinrichtung zu kommunizieren. Dabei kann ein (de facto) standardisiertes Kommunikationsverfahren (z.B. ZigBee ^{®}, Bluetooth ^{®} Low Energy, WLAN, usw.) oder ein proprietäres Kommunikationsverfahren zum Einsatz kommen. Ein solches proprietäres Kommunikationsverfahren ist beispielsweise aus der WO 2015/124197 A1 bekannt, deren Offenbarung hiermit durch Bezugnahme aufgenommen ist. Im Unterschied zur WO 2015/124197 A1 kommt das dort offenbarte Zeitschlitz-Kommunikationsverfahren im vorliegenden Fall nicht in den an der Regalschiene angebrachten Geräten, die ja drahtgebunden mit der Versorgungseinrichtung verbunden sind, sondern in der Versorgungseinrichtung für die Kommunikation mit dem Access-Point zur Anwendung. Der in der WO 2015/124197 A1 im Zusammenhang mit den elektronischen Anzeigeeinheiten (dort als Funk-Tags angeführt) offenbarte systematische Wechsel zwischen einem extrem energiesparenden Schlaf-Zustand und einem im Vergleich dazu energiekonsumierenden Aktiv-Zustand, um einerseits einen möglichst energiesparenden Betrieb sicherzustellen und anderseits den Synchronismus mit dem Access-Point zu gewährleisten, ist im vorliegenden Fall in der Versorgungseinrichtung implementiert.

Unabhängig von der Wahl des Funk-Kommunikationsverfahrens kann eine Gruppe von Versorgungseinrichtungen einem Access-Point zugeordnet sein, der sie funktechnisch versorgt, wobei jede Versorgungseinrichtung die mit ihrem Bussystem verbundenen Geräte leitungsgebunden versorgt. Die jeweilige Versorgungseinrichtung bildet also einen Zugangs- oder Kontrollknoten für die an ihrer Tragevorrichtung, wie z.B. ihrer Regalschiene, installierten Geräte.

Grundsätzlich kann vorgesehen sein, dass die Versorgungseinrichtung immer dann in ihrem extrem energiesparenden Schlaf-Zustand verweilt, wenn kein Aktivitätsbedarf vorliegt.

Auch die Versorgungseinrichtung weist eine Versorgungseinrichtung-Elektronik auf, die sich in Schaltungsblöcke gliedern lässt. So ist auch hier ein Schaltungsblock zur elektrischen Versorgung der Versorgungseinrichtung vorgesehen. Dabei kann es sich um einen Spannungsregler handeln, wie z.B. einen Längsregler, insbesondere einen LDO (LDO steht für Low-Drop-Out) Linearregler handeln, der an einen internen oder einen externen Energiespeicher, welcher eine Spannung von 3,7 bis 4,2 Volt abgibt (wie z.B. eine Batterie, ein Batteriepack oder eine Konfiguration von wieder aufladbaren Batteriezellen) angeschlossen ist und eine interne Versorgungsspannung der Versorgungseinrichtung mit ca. 3,3 Volt generiert.

Ein weiterer Schaltungsblock kann eine Logikstufe, insbesondere realisiert mit einem Mikrocontroller sein, welcher mit Hilfe der internen Versorgungsspannung betrieben wird. Der Mikrocontroller stellt, ggf. unter Einbeziehung seiner Peripherie, die verschiedenen Funktionalitäten der Versorgungseinrichtung bereit, die abgesehen von den Hardware-Features mit Hilfe einer vom Mikrocontroller abgearbeiteten Software realisiert sind, die in einem Speicher des Mikrocontrollers gespeichert ist, und ggf. bei ihrer Ausführung Hardware-Features nütz.

Ein weiterer Schaltungsblock kann eine Stufe zur Generierung der (externen) Versorgungsspannung für die zweite Leitung des Bussystems sein, wobei hierfür beispielsweise ein Step-Up-Converter zum Einsatz kommen kann, der eingangsseitig mit dem externen Energiespeicher verbunden ist. Ausgangsseitig generiert der Step-Up-Converter die Bussystem-Versorgungsspannung mit dem definierten Soll-Wert von z.B. 5 Volt.

Ein weiterer Schaltungsblock kann durch eine Fehlererkennungsschaltung gebildet sein, die zum Erkennen von Fehlern auf der zumindest einen dritten Leitung ausgebildet ist und die zwischen der zumindest einen dritten Leitung und den Sende- und Empfangs-Pins des Mikrocontrollers wie auch einem Analog-Digital-Wandler-Pin (ADC-Eingang) des Mikrocontrollers geschaltet ist. Mit dem ADC-Eingang kann der Mikrocontroller auch die auf der zumindest einen dritten Leitung vorliegende Spannung erfassen, ggf. messen oder bewerten. Ein weiterer Analog-Digital-Wandler-Pin (ADC-Eingang) des Mikrocontrollers kann auch direkt mit der zweiten Leitung verbunden sein, damit der Mikrocontroller auch die auf der zumindest einen dritten Leitung vorliegende Spannung erfassen, ggf. messen oder bewerten kann.

Ein weiterer Schaltungsblock kann zur Erkennung einer Überlastung des Bussystems dienen, insbesondere verursacht auf der zumindest einen dritten Leitung, und ist so konfiguriert, dass bei erkannter Überlastung der Ausgang des Step-Up-Converters von der zweiten Leitung getrennt wird.

Ein weiter Schaltungsblock kann das Funksystem betreffen, welches für den Funkverkehr mit dem erwähnten Access-Point zum Einsatz kommt. Dieser Schaltungsblock kann eine Antennenkonfiguration wie auch ein Anpassungsnetzwerk aufweisen. Ebenso ist hier eine Schaltung zur Umsetzung von funktechnisch empfangenen Analogsignalen in Digitalsignale und umgekehrt vorgesehen. Dieser Schaltungsblock ist mit dem Mikrocontroller verbunden, sodass der Mikrocontroller im Funkverkehr mit dem Access-Point Daten empfangen und seinerseits zu sendende Daten per Funksignal abgeben kann.

Weiterhin kann ein Schaltungsblock vorgesehen sein, der eine durch den Mikrocontroller ansteuerbare Signalisierungseinheit, im einfachsten Fall eine einzelne LED, aufweist.

Weiterhin kann auch ein Schaltungsblock vorgesehen sein, der eine durch den Mikrocontroller abfragbare Eingabeeinheit, im einfachsten Fall eine Taste, aufweist.

Auch kann als ein weiterer Schaltungsblock eine Speicherstufe, im vorliegenden Fall beispielsweise ein Flash-Speicher, vorgesehen sein, der durch den Mikrocontroller über ein z.B. Serial Peripheral Interface (abgekürzt SPI) angesprochen werden kann.

Auch wenn in den vorangehend angeführten Textpassagen die Versorgungseinheit-Elektronik und die Geräte-Elektronik gedanklich anhand von Schaltungsböcken erörtert wurde, sei an dieser Stelle bemerkt, dass die jeweilige Elektronik auch z.B. ASIC (Application Specific Integrated Circuit) oder als "System-on-a-Chip" ausgeführt sein kann, so dass sich die Elektronik weniger in diskrete Schaltungsblöcke, sondern eher in funktionale Einheiten eines integrierten Schaltkreises gliedern lässt.

Bei dem externen Energiespeicher kann es sich um eine gewöhnliche Batterie oder eine Konfiguration von Batterien bzw. Batteriezellen handeln. Als besonders vorteilhaft hat es sich jedoch erwiesen, wenn die Versorgungseinrichtung zwecks ihrer elektrischen Versorgung mit einem externen Energiespeicher gekoppelt ist, wobei es sich bei dem externen Energiespeicher besonders bevorzugt um einen "smarten Energiespeicher" handelt, und die Versorgungseinrichtung dazu ausgebildet ist, über eine Daten- bzw. Signalleitung von dem externen Energiespeicher Informationen bzw. Daten betreffend die Energiespeicherart und/oder die elektrische Speicherkapazität und/oder die Nutzungshistorie und/oder den Energieversorgungsstatus zu erhalten und zu verarbeiten. Der smarte Energiespeicher kann einen internen Batterie-Mikrocontroller aufweisen, der über sein Kommunikationsinterface, z.B. realisiert gemäß der I²C oder SMBUS (System Management Bus) Spezifikation, mit der Versorgungseinrichtung-Elektronik, die ein kompatibles Kommunikationsinterface aufweist, insbesondre mit deren Logikstufe, z.B. über ein Kabel verbunden werden kann. Mit Hilfe des Batterie-Mikrocontrollers lassen sich verschiedenste smarte Funktionen realisieren, die z.B. die genaue Erfassung des Lade- bzw. Verbrauchszustands wie auch andere den Energiespeicher betreffende Informationen umfassen können, die von dem Energiespeicher an die Versorgungseinrichtung kommuniziert werden können. Der Energiespeicher kann in die Versorgungseinrichtung integriert sein. Bevorzugt ist er jedoch wie erwähnt extern angeordnet, so dass er bei zur Neige gehender Ladung durch einfaches Abstecken von der Versorgungseinrichtung gegen einen aufgeladenen Energiespeicher ausgetauscht werden kann, und zwar insbesondere so, dass die Versorgungeinrichtung als solches nicht von der Tragevorrichtung (z.B. der Regalschiene) gelöst werden muss.

Weiterhin kann es von Vorteil sein, wenn der externe (smarte) Energiespeicher ein Sicherheitselement, bevorzugt realisiert durch einen Security-Chip, aufweist, mit dessen Hilfe der externe Energiespeicher gegenüber der Versorgungseinrichtung authentifizierbar ist. Die damit einhergehenden Vorteile und Wirkungen sind in weiterer Folge im Text der allgemeinen Beschreibung an jener Stelle erörtert, wo auf das elektronische Geräte, das ebenfalls mit einem solchen Sicherheitselement ausgerüstet sein kann, eingegangen ist.

Die Übertragung von Signalen- und/oder Daten über die Leitungen des Bussystems kann synchron unter Ausnutzung von zumindest einer Steuerleitung und einer oder mehrerer Datenleitungen erfolgen. In diesem Bussystem sind je nach Implementierung mehrere dritte Leitungen vorgesehen. Jene für die Übertragung von Signalen- und/oder Daten vorgesehene zumindest eine dritte Leitung ist jedoch in einer bevorzugten Ausbildungsform tatsächlich nur durch eine einzige dritte Leitung realisiert. Somit ist in dieser bevorzugten Ausbildungsform das Bussystem ein reines Drei-Leitung-System. In weiterer Folge wird daher aus Gründen der leichteren Lesbarkeit, wo angebracht, nur von einer dritten Leitung im Sinne einer einzigen dritten Leitung gesprochen.

Die drei Leitungen können als flache Leitungsbahnen ähnlich jenen, wie sie bei gedruckten Schaltungen zum Einsatz kommen, realisiert sein und auf einer für solche Leiterbahnen typischen z.B. "Pertinax-Platte" aufgebracht sein. Bevorzugt sind sie jedoch mit Drähten, die einen im wesentlichen kreisförmigen Querschnitt aufweisen, realisiert. In einer bevorzugten Ausbildungsform haben diese Drähte keine Isolationsschicht. Sie sind also blank und sie sind in die Oberfläche einer isolierenden, also nicht-leitenden Platte, bevorzugt einer Kunststoff-Platte, die auch als Leitungsträger bezeichnet wird, integriert, wo sie von den Geräten mit deren Kontakten kontaktierbar sind.

In weiterer Folge wird auf die Veränderung der Versorgungspannung eingegangen. Grundsätzlich würde es ausreichen, dass irgendeine auf der Geräteseite detektierbare Veränderung der Versorgungsspannung zur Anwendung kommt. Zu deren Detektion weist das Gerät eine Detektionsstufe auf, die zur Detektion einer temporären Veränderung der Versorgungsspannung ausgebildet ist, wobei das Gerät bei einer solchen Detektion zum Verändern seines Betriebsmodus ausgebildet ist. Um jedoch das Risiko von Fehlerkennungen oder auch das Risiko eines ungewollten "Reset" (hardwaremäßiges Zurücksetzen) der mit dem Systembus verbundenen Geräte zu vermeiden, hat es sich als vorteilhaft erwiesen, wenn die Versorgungseinrichtung zur Veränderung der Versorgungsspannung gemäß einer vordefinierten Signalform ausgebildet ist. Vorteilhafterweise ist auch die Detektionsstufe des Geräts zur Detektion der vordefinierten Signalform der Versorgungsspannung ausgebildet. Damit geht der Vorteil einher, dass die Detektion auf der Seite des Gerätes erleichtert ist, weil ja die zu detektierende Signalform bereits bekannt ist. Somit lässt sich auf der Seite des Geräts die Detektionsstufe gezielt dazu ausbilden, die vordefinierte Signalform der Versorgungsspannung zu detektieren.

An dieser Stelle sei noch erwähnt, dass es auch unterschiedliche vordefinierte Signalformen geben kann, um z.B. bestimmte Gerätegruppen, Gerätetypen, Gerätearten oder Geräteklassen oder auch individuelle Geräte gezielt ansprechen zu können, ohne dass andere Geräte, Gerätetypen, Gerätearten oder Geräteklassen oder Gerätegruppen reagieren müssen.

Dies kann auf unterschiedliche Weise implementiert sein. So kann die vordefinierte erste Signalform der Versorgungsspannung durch zumindest einen Parameter, der nachfolgend angeführten Gruppe definiert sein, nämlich: a) eine fallende Flanke, insbesondere mit definiertem Verlauf der fallenden Flanke, bevorzugt mit einem Wert der Steigung (Spannungsänderung pro Zeiteinheit) der fallenden Flanke innerhalb eines definierten Wertebereichs, besonders bevorzugt mit einem definierten Spannungswertunterschied, b) eine steigende Flanke, insbesondere mit definiertem Verlauf der steigenden Flanke, bevorzugt mit einem Wert der Steigung der steigenden Flanke (Spannungsänderung pro Zeiteinheit) innerhalb eines definierten Wertebereichs, besonders bevorzugt mit einem definierten Spannungswertunterschied, c) einen während einer Zeitspanne vorliegenden Spannungswert, der sich von dem Soll-Wert der Versorgungsspannung unterscheidet, bevorzugt mit einem niedrigeren Wert als der Wert der Versorgungsspannung, mehr bevorzugt mit einem dem digitalen Low-Zustand entsprechenden Wert, besonders bevorzugt einem dem Bezugspotential entsprechenden Wert.

Diese Varianten sind im Wesentlichen hinsichtlich ihrer Signalisierungswirkung gleichwertig zu betrachten, wobei sich jedoch die Varianten gemäß Punkt c) als am leichtesten zu implementieren und vor allem als am einfachsten zu detektieren erwies.

So kann beispielsweise das Gerät einen Mikrocontroller aufweisen und die Detektionsstufe mit Hilfe des Mikrocontrollers realisiert sein, wobei bei dem Mikrocontroller ein Interrupt-Eingang des Mikrocontrollers genutzt wird, um die vordefinierte Signalform zu detektieren, wobei der Interrupt-Eingang des Mikrocontrollers mit der zweiten Leitung verbunden bzw. gekoppelt ist und wobei das Vorliegen der vordefinierten Signalform den Interrupt des Mikrocontrollers auslöst, was den Betriebsmodus des Geräts verändert. Da der Interrupt-Eingang des Mikrocontrollers genau so konfiguriert ist, dass er die Signalform gemäß Punkt c), ggf. mit für den Interrupt-Eingang passender Flankensteilheit, als Auslöser für den Interrupt erkennt, sind keine weiteren Maßnahmen nötig, um eine zuverlässige Detektion sicherzustellen.

Wie erwähnt, soll mit der temporären Veränderung der Versorgungsspannung zwecks Einleitung einer Veränderung eines Betriebszustands kein Reset ausgelöst werden. Daher hat es sich als vorteilhaft erwiesen, dass nicht nur die Signalform vordefiniert ist, sondern insbesondere auch ihre Dauer. Gemäß diesem Aspekt dauert die temporäre Veränderung der Versorgungsspannung, insbesondere die Dauer zwischen dem Start der Veränderung und der Wiederherstellung der Versorgungsspannung mit dem Soll-Wert gegenüber dem Bezugspotential der Versorgungsspannung, weniger als 500 µs, bevorzugt weniger als 250 µs, besonders bevorzugt in der Größenordnung von 100 µs.

Auf der Geräteseite wird dieser Aspekt wie folgt berücksichtigt. Das Gerät weist eine zweite Spannungserzeugungseinrichtung auf, die zum Empfang der Versorgungsspannung über die zweite Leitung des Bussystems konfiguriert ist und die unter Ausnutzung dieser Versorgungsspannung zur Erzeugung einer geräteinternen Gerät-Versorgungsspannung konfiguriert ist. Die relativ kurze Dauer der Veränderung der Versorgungsspannung kann nun auf der Seite des Geräts durch einfache Maßnahmen berücksichtigt werden, um die unerwünschte Auslösung eines Reset bedingt durch eine Versorgungsspannungsunterbrechung zu verhindern. Diese Berücksichtigung kann schaltungstechnisch so aussehen, dass die zweite Spannungsversorgungseinrichtung eingangsseitig mit einem Pufferkondensator gegen die temporäre Veränderung der Versorgungsspannung abgesichert ist. Der Pufferkondensator ist seinerseits mit einer Diode, die zur direkten Verbindung mit der zweiten Leitung zwecks Zuleitung der Versorgungsspannung vorgesehen ist und in Durchlassrichtung hin zu dem Kondensator gepolt ist, gegen eine Entladung des Pufferkondensators hin zur zweiten Leitung abgesichert. Der Pufferkondensator ist so dimensioniert, dass in ihm ausreichend elektrische Energie speicherbar ist, um die geräteinterne Energieversorgung während der Dauer der Veränderung der Versorgungsspannung sicherzustellen.

Zwecks Erzeugung der Veränderung der Versorgungsspannung kann die Versorgungseinrichtung so konfiguriert sein, das sie eine erste Spannungserzeugungsstufe aufweist, die zur Erzeugung der Versorgungsspannung mit dem Soll-Wert und zur Abgabe der Versorgungsspannung an ihrem Ausgang ausgebildet ist, und eine durch ein Steuersignal ansteuerbare Schaltstufe aufweist, die dazu ausgebildet ist, in Abhängigkeit von dem Steuersignal wechselweise entweder die zweite Leitung mit der ersten Leitung oder die zweite Leitung mit dem Ausgang der Spannungserzeugungsstufe zu verbinden, und dass der Mikrocontroller der Versorgungseinrichtung mit einem seiner Ausgänge mit der Schaltstufe verbunden ist und zur Abgabe des Steuersignals an die Schaltstufe konfiguriert ist. Der Mikrocontroller steuert somit auf digitale Weise die Schaltstufe, die mit Hilfe von MOS-FET Transistoren realisiert ist.

Hierbei hat es sich als besondere vorteilhaft erwiesen, dass die Schaltstufe zweiteilig ausgebildet ist. Ein erster Schaltstufenteil ist zur Unterbrechung der Stromversorgung über die zweite Leitung des Bussystems vorgesehen. Ein zweiter Schaltstufenteil ist zur tatsächlichen Verbindung der zweiten Leitung mit dem Bezugspotenzial vorgesehen. Im Betrieb wird zunächst die erste Schaltstufe aktiv und die Stromversorgung mit einigen Mikrosekunden Vorlauf zum Aktivwerden der zweiten Schaltstufe unterbrochen, um einen Kurzschluss zu verhindern. Mit Beendigung der temporären Veränderung der Versorgungsspannung erfolgt die Deaktivierung der beiden Schaltstufen in umgekehrter Reihenfolge.

In weiterer Folge ist auf die Betriebsmodi und ihre Veränderung eingegangen. Die hier beispielhaft erörterten Aspekte dienen vor allem der Erfassung von Geräten, die mit dem Bussystem verbunden sind, und mit denen in weiterer Folge eine Kommunikation abzuwickeln ist.

Gemäß einem Aspekt der Erfindung weist die Versorgungseinrichtung einen Erfassung-Modus auf, in dem die Versorgungseinrichtung zum Erfassen von Identifikationsdaten, die ein mit dem Bussystem verbundenes elektronisches Gerät eindeutig identifizieren, von einem oder mehreren mit den Leitungen verbundenen elektronischen Geräten ausgebildet ist. Um diese Erfassung auf der Seite der Versorgungseinrichtung zu starten, also ihren Betriebsmodus dahingehend zu verändern, ist die Versorgungseinrichtung zum Einnehmen des Erfassung-Modus ausgebildet, bevor oder sobald sie die Veränderung der Versorgungsspannung bewirkt. Abgesehen von Spezialfällen weist jedes Gerät, das mit dem Bussystem verbunden ist und am Bussystem individuell adressierbar sein soll, Identifikationsdaten auf und ist zum Einnehmen eines Identifikation-Modus ausgebildet, in dem das Gerät zur Abgabe der Identifikationsdaten über die zumindest eine dritte Leitung konfiguriert ist. Das Gerät ist zudem dazu ausgebildet, zwecks Veränderung seines Betriebsmodus den Identifikation-Modus einzunehmen und bei festgestellter Veränderung der Versorgungsspannung seinen Betriebsmodus dahingehend zu verändern, dass es den Identifikation-Modus einnimmt.

Da die Versorgungseinrichtung beim Start des Erfassung-Modus noch nicht über die Anzahl der am Bussystem angeschlossenen Geräte informiert sein muss, hat es ich als besonders vorteilhaft erwiesen, dass die Versorgungseinrichtung dazu konfiguriert ist, so lange im Erfassung-Modus zu verharren und Identifikationsdaten zu empfangen, bis dass keine weiteren Identifikationsdaten mehr empfangen werden. Da wie gesagt grundsätzlich eine unbekannte Anzahl der Geräte an dem Bussystem angeschlossen sein kann und alle gleichzeitig in den Identifikation-Modus eintreten, ist bei den Geräten ein Prozess bzw. Verfahren implementiert, der/das es den Geräten erlaubt, trotz konkurrierender Aufschaltung auf das Bussystem ihre Identifikation-Daten zuverlässig und vollständig zu übertragen. Im Detail ist jedes Gerät in dem Identifikation-Modus dazu konfiguriert, seine Identifikationsdaten solange abzugeben, ggf. auch die Abgabe (ggf. zumindest von Teilen der Identifikationsdaten) zu wiederholen, bis die Identifikationsdaten vollständig störungsfrei abgegeben werden konnten. Insbesondere weist jedes Gerät in dem Identifikation-Modus eine Open-Drain-Verbindung mit der zumindest einen dritten Leitung für die Abgabe der Identifikationsdaten auf. Dies ist für den Sendeausgang des Geräts realisiert. Im Identifikation-Modus sind alle am Bussystem mit der dritten Leitung verbundenen Geräte mit dieser speziellen Ausgangskonfiguration parallel zueinander geschaltet. Damit ist festgelegt, dass bei konkurrierender Übertragung unterschiedlicher Informationseinheiten (Bits) der logische Zustand bzw. der Signalpegel-Zustand "low" bzw. das logische Symbol "0" gegenüber dem logischen Zustand bzw. dem Signalpegel-Zustand "high" bzw. dem logischen Symbol "1" dominiert. Um nun bei einem Gerät festzustellen, dass es selbst eine logische "1" zu senden versucht, während ein anderes Gerät eine logisch "0" sendet, sind die Geräte im Identifikation-Modus zum gleichzeitigen Mithören auf der dritten Leitung ausgebildet, während sie Ihre Daten senden. Es ist also jedes Gerät in dem Identifikation-Modus dazu konfiguriert, gleichzeitig mit dem Abgeben der Identifikationsdaten zu prüfen, ob die auf der zumindest einen dritten Leitung auftretende Signalfolge zu der Folge der logischen Zustände korrespondiert, welche durch die eigenen Identifikationsdaten definiert sind, und sobald eine Abweichung zwischen dem aktuellen Signalzustand der zumindest einen dritten Leitung und dem aktuellen logischen Zustand der eigenen Identifikationsdaten auftritt, die Abgaben der Identifikationsdaten abzubrechen und erst dann wieder erneut zu starten, wenn die zumindest eine dritte Leitung als frei für die neuerliche Abgange der eigenen Identifikationsdaten erkannt wird. Dies kann durch Zeitablauf, Signalpegel oder Befehlsempfang gegeben sein. In anderen Worten bedeutet dies, dass jedes Gerät, das feststellt, dass sein Versuch eine logische "1" zu senden von einem anderen Gerät durch das Aussenden einer logischen "0" "überstimmt" wurde, die Aussendung seiner Identifikationsdaten unterbricht. Das andere Gerät oder auch die anderen Geräte, die zeitgleich die dominierende "0" senden und diesen Zustand auf der dritten Leitung durch das erwähnte gleichzeitige Mithören erkennen, setzen ihre Aussendung der Identifikationsdaten fort, bis letztendlich alle Geräte mit Ausnahme eines einzigen ihre Aussendung abgebrochen haben, da jedes Gerät durch eindeutige Identifikationsdaten gekennzeichnet ist. Nachdem die Identifikationsdaten des einzigen übriggebliebenen Geräts an die Versorgungseinrichtung übertragen und dort gespeichert wurden, beginnen alle verbleibenden neuerlich mit der konkurrierenden Übertragung ihrer individuellen Identifikationsdaten, um letztendlich wiederum nur die Identifikationsdaten eines einzigen Geräts vollständig zu übertragen. Dieser Vorgang wird so lange fortgesetzt, bis die Identifikationsdaten von allen Geräten vollständig und störungsfrei übertragen wurden. Dies wird bei der Versorgungseinrichtung derart festgestellt, dass nach Übermittlung der Identifikationsdaten des letzten übertragenden Geräts in einem Zeitfenster keine weiteren Identifikationsdaten mehr empfangen werden.

Weiterhin sei angemerkt, dass die Formulierung "...erst dann wieder erneut zu starten, wenn die zumindest eine dritte Leitung als frei für die neuerliche Abgange der Identifikationsdaten erkannt wird." auf verschiedene Weise realisiert sein kann. So kann unter Kenntnis der Länge / Dauer der Abgabe der Identifikationsdaten mit konstanter Anzahl von Symbolen abgewartete werden, bis alle Symbole der Identifikationsdaten eines Geräts abgegeben wurden und dann automatisch mit der neuerlichen Abgabe der Identifikationsdaten begonnen werden. Auch kann nach jeder Abgabe der Identifikationsdaten darauf gewartet werden, bis ein Abgabebefehl ausgesandt durch die Versorgungseinrichtung empfangen wird und erst dann mit der neuerlichen Abgabe der Identifikationsdaten begonnen werden.

Die Übertragung der Identifikationsdaten kann wie hier erörtert ohne weitere Synchronisationssignale während ihrer Dauer von statten gehen. Dies bedingt jedoch eine relativ aufwändige Elektronik der Geräte, weil diese zumindest für die maximal zu erwartende Übertragungsdauer synchron zueinander betrieben werden müssen. Typischerweise kommt hierfür in jedem Gerät ein relativ teurer Quarzschwingkreis (Quarzoszillator) zum Einsatz, der eine Systemtakt für das jeweilige Gerät erzeugt.

Um diese teure Ausbildung der Geräte zu vermeiden, kann auch vorgesehen sein, dass die Versorgungseinrichtung ein Synchronisationssignal auf der zumindest einen dritten Leitung während der Erfassung der Identifikationsdaten bereitstellt, an dem sich alle am Bussystem angeschlossenen Geräte, die ihre Identifikationsdaten abzugeben beabsichtigen, orientieren. Dabei kann es sich um ein periodisches Signal mit definierter Struktur handeln, das von den ja sowieso immer im Identifikation-Modus mitlauschenden Geräten empfangen wird.

Vorteilhafterweise erfolgt die Erfassung bzw. Abgabe der Identifikationsdaten so, dass eine bestimmte Anzahl von Bytes (z.B. 6 Bytes) dafür vorgesehen bzw. definiert ist. Diese Anzahl von Bytes ist systemweit allen Geräten vorab bekannt, also einprogrammiert und bevorzugt unveränderbar. Die tatsächliche Übermittlung der Identifikationsdaten erfolgt im Raster der Taktung durch die Versorgungseinrichtung, die zu Beginn jeder Übertragung eines Bytes ein Startbit (logisches Symbol "0", Leistungszustand "Low") aussendet. Das Startbit hat hier die Funktion eines Synchronisationssignals bzw. Taktsignals, sodass sich die Geräte zu Beginn jeder Abgabe eines Bytes darauf synchronisieren können. Durch diese Maßnahme kann auf die erwähnten, teuren Quarzschwingkreise verzichtet werden und die Geräte extrem kostengünstig hergestellt werden.

Bei diesem vorteilhaften Verfahren zur Übertragung der Identifikationsdaten kann auch ein Stoppbit involviert sein, das durch die Versorgungseinrichtung nach Verstreichen der Zeitspanne, die für eine Übertragung eines Bytes reserviert ist, ausgesandt wird. Dieses Stoppbit ist durch das logische Symbol "1", Leitungszustand "high", definiert.

Wie vorangehend erörtert versucht die Versorgungseinrichtung so lange Identifikationsdaten zu empfangen, bis dass keine Identifikationsdaten mehr übertragen werden. Definitionsgemäß liegt diese Situation dann vor, wenn der während der gesamten Empfangsdauer, die für die Übertragung eines Bytes vorgesehen ist, kein Symbol- bzw. Leitungszustand "High" durch die Versorgungseinrichtung festgestellt wird. Dies impliziert, dass die Identifikationsdaten der Geräte per Definition kein Byte mit dem Hexadezimal-Wert "FF" (in Binärdarstellung "11111111") aufweisen dürfen.

Soweit ein Einbetten der Identifikationsdaten pro Byte zwischen einem Startbit und einem Stoppbit vorgesehen ist, erfolgt die Synchronisation der Geräte alle 10 Bits durch das Startbit. Die Drift der Elektronik kann also so akzeptiert werden, dass ein Synchronismus der Geräte zumindest für diese Zeitspanne aufrecht bleibt.

Natürlich kann auch vorgesehen sein, dass nicht die gesamten für die Übertragung der Identifikationsdaten vorgesehenen Bytes nur für die Übertragung von Adressdaten der Geräte eingesetzt werden. Vielmehr kann auch ein Byte oder mehrere Bytes für die Übertragung einer Statusinformation oder die Übertragung einer Vielzahl von individuellen Status-Flags vorgesehen sein. Auch können in den Identifikationsdaten bereits Daten zur Authentifizierung des jeweiligen Geräts enthalten sein.

In dem Erfassung-Modus der Versorgungseinrichtung und in dem Identifikation-Modus des Geräts sind beide Entitäten zum Kommunizieren in einem Niedriggeschwindigkeit-Kommunikationsvorgang konfiguriert. In diesem langsamen Kommunikationsmodus kann vorgesehen sein, dass nur ein sehr eingeschränkter Befehlssatz für die Versorgungseinrichtung zur Verfügung, so z.B. ein Abfragebefehl, den alle Geräte verstehen und nach dessen Empfang alle Geräte ihre Identifikationsdaten wie zuvor beschrieben übermitteln, oder auch ein Selektionsbefehl, mit dem ein einziges Gerät selektierbar ist, worauf nachfolgend noch im Detail eingegangen ist.

Um nun den Vorgang der Erfassung der Identifikationsdaten zu starten kann implementiert sein, dass alle Geräte, die durch die temporäre Veränderung der Versorgungsspannung nun synchronisiert sind, wie zuvor erörtert ihre Identifikationsdaten ohne Beachtung bzw. Existenz eines Start- oder auch Stopp-Bits abgeben.

Auch kann vorgesehen sein, dass nach dem Erkennen der temporären Veränderung der Versorgungspannung alle Geräte in einem Zustand, in dem sie auf Signale auf der zumindest einen dritten Leitung lauschen, verharren. In dieser einleitenden Zeitspanne, also bevor die Identifikationsdaten erfasst werden, hat in dieser Variante nur die Versorgungseinrichtung die Berechtigung, die zumindest eine dritte Leitung zu nutzen.

Die tatsächliche Abgabe der Identifikationsdaten kann nun durch das Auftreten des ersten Start-Bits gestartet werden.

Auch kann in der einleitenden Zeitspanne darauf gewartet werden, dass die Versorgungseinrichtung den Abfragebefehl in besagter einleitender Zeitspanne senden, um den Vorgang der Erfassung der Identifikationsdaten, also auch das Abgeben der Identifikationsdaten zu starten. Danach kann die tatsächliche Abgabe der Identifikationsdaten je nach Implantierung entweder ohne Einbettung in einen Rahmen aus Start- und Stopp-Bit oder eben mit Einbettung in den Rahmen aus Start- und Stopp-Bit erfolgen.

In allen Ausbildungsformen bzw. Ausbildungsvarianten ist die Versorgungseinrichtung in dem Erfassung-Modus zum Empfang der Identifikationsdaten in dem Niedriggeschwindigkeit-Kommunikationsvorgang konfiguriert, insbesondere mit einer Symbolrate pro Sekunde von bis zu 100k Boud. In Analogie dazu ist das (jedes am Bussystem involvierte) Gerät in dem Identifikation-Modus zur Abgabe der Identifikationsdaten in dem Niedriggeschwindigkeit-Kommunikationsvorgang konfiguriert, insbesondere mit einer Symbolrate pro Sekunde von bis zu 100k Boud. Es ist also die zur Anwendung kommende Symbolrate pro Sekunde vorab definiert und sowohl für die Versorgungseinrichtung wie auch für die am Bussystem involvierten Geräte fix eingestellt, insbesondere unveränderlich eingestellt. Damit wird erreicht, dass die Versorgungseinrichtung vorab gar nicht wissen muss, welche Geräte an den Systembus angeschlossen sind.

Nachdem jedes Gerät seine Identifikationsdaten abgegeben hat, wartet es solange, bis es den Selektionsbefehl von der Versorgungseinrichtung empfängt, mit der die Versorgungseinrichtung einen einzigen Kommunikationspartner durch Angabe der Adresse des zu selektierenden Geräts als Bestanteil des Selektionsbefehls aus dem Pool der an der Erfassung der Identifikationsdaten beteiligten Geräte für eine weitere individuelle Kommunikation auswählt.

Zu diesem Zweck ist die Versorgungsvorrichtung in dem Erfassung-Modus dazu konfiguriert, ein einziges Gerät, von dem Identifikationsdaten erfasst wurden, zu selektieren, um im Bussystem weiter aktiv zu bleiben. Dies geschieht mit dem erwähnten und geräteübergreifend erkennbaren Selektionsbefehl, der von der Versorgungeinrichtung noch mit niedriger Geschwindigkeit abgegeben wird und einen Adressanteil der Identifikationsdaten aufweist.

An dieser Stelle sein auch erwähnt, dass die Identifikationsdaten neben dem reinen Adressanteil auch einen weiteren Informationsanteil aufweisen können, der z.B. Auskunft über den Typ des Geräts oder die Klasse des Geräts usw. vermitteln kann. Für die Erfassung der Identifikationsdaten muss jedenfalls eine fix vordefinierte Anzahl von Symbolen bzw. Bytes festgelegt sein, damit die Erfassung der Identifikationsdaten wie erörtert ohne weitere Abstimmung zwischen den Kommunikationspartner erfolgen kann.

Grundsätzlich hat es sich als vorteilhaft erwiesen, dass jedes Gerät einen Bussystem-Inaktivitätsmodus aufweist, in dem das Gerät eine Bussystem-Inaktivität einnimmt, wobei es mit Hilfe der ersten und der zweiten Leitung elektrisch versorgbar ist, jedoch elektronisch von der zumindest einen dritten Leitung getrennt ist, und das Gerät derart ausgebildet ist, dass, wenn kein Kommunikationsbedarf vorliegt, der Bussystem-Inaktivitätsmodus eingenommen wird.

Das bzw. jedes involvierte Gerät ist in dem Identifikation-Modus dazu konfiguriert, nach Abgabe seiner Identifikationsdaten zu prüfen, ob es seine Bussystem-Inaktivität einzunehmen hat oder ob es von der Versorgungseinrichtung selektiert wurde, und daher im Bussystem weiter aktiv zu bleiben hat. Darunter ist zu verstehen, dass das seine Bussystem-Inaktivität einnehmende Gerät die dritte Leitung nicht mehr beeinflusst bzw. belastet, sich bevorzugt von dieser dritten Leitung elektronisch abkoppelt. Die zumindest eine dritte Leitung steht also nachdem sich alle nicht selektierten Geräte von der dritten Leitung abgekoppelt haben und diese nicht mehr elektronisch belasten oder beeinflussen (kapazitiv bzw. induktiv) ausschließlich für die Kommunikation zwischen der Versorgungseinrichtung und dem selektierten Gerät zur Verfügung.

Die Versorgungseinrichtung weist einen Individual-Kommunikationsmodus auf, in dem die Versorgungseinrichtung zum bidirektionalen Kommunizieren mit einem einzigen selektierten Gerät in einem Hochgeschwindigkeit-Kommunikationsvorgang ausgebildet ist. Dabei kann eine Symbolrate pro Sekunde von mehr als 100k Boud, besonders bevorzugt in der Größenordnung von 1000k Boud, zur Anwendung kommen. Die zur Anwendung kommende Symbolrate ist hier jedenfalls höher als im Niedriggeschwindigkeits-Kommunikationsvorgang.

Die Versorgungseinrichtung ist nach erfolgter Selektion eines einzigen Geräts zum Wechseln von dem Erfassung-Modus in den Individual-Kommunikationsmodus ausgebildet ist. In Analogie dazu weist auch jedes Gerät diesen Individual-Kommunikationsmodus auf, in dem das Gerät für eine individuelle Kommunikation mit der Versorgungseinrichtung in dem Hochgeschwindigkeit-Kommunikationsvorgang konfiguriert ist, wobei jedes Gerät dazu ausgebildet ist, bei festgestellter Selektion den Identifikation-Modus zu verlassen und den Individual-Kommunikationsmodus einzunehmen.

Nachdem die Kommunikationspartner in den Individual-Kommunikationsmodus gewechselt haben, kann eine auf die Fähigkeiten und Funktionen des selektierten Geräts abgestimmte Kommunikation stattfinden.

Bevorzugt wird sowohl auf der Seite der Versorgungseinrichtung wie auch auf der Seite des Geräts ein dort implementierter sogenannter UART (Universal Asynchronous Receiver Transmitter) aktiviert, mit dessen Hilfe in Folge im Individual-Kommunikationsmodus die Kommunikation zwischen dem selektierten Gerät und der Versorgungseinrichtung abgewickelt wird.

Jedes Gerät ist dazu konfiguriert, den Hochgeschwindigkeit-Kommunikationsvorgang gemäß einem geräte- oder geräteartspezifischen Kommunikationsprotokoll und/oder Befehlsset durchzuführen. Damit ist sichergestellt, dass im Unterschied zu dem Identifikation-Modus das volle Spektrum der Kommunikationsmöglichkeiten ausschöpfbar ist und auch der volle Funktionsumfang des Geräts ansteuerbar bzw. einsetzbar ist.

Um dies auf der Seite der Versorgungseinrichtung zu nützen, ist es von Vorteil, dass die Versorgungseinrichtung eine Datenstruktur speichert, in der geräte- oder geräteartspezifische kommunikationstechnische Parameter gespeichert sind, und die Vorrichtung dazu konfiguriert ist, unter Zuhilfenahme der Datenstruktur den Hochgeschwindigkeit-Kommunikationsvorgang gemäß einem geräte- oder geräteartspezifischen Kommunikationsprotokoll und/oder Befehlsset mit dem einzigen selektierten Gerät durchzuführen.

In der Datenstruktur können z.B. Parameter gespeichert sein, welche die Kommunikationsgeschwindigkeit individuell festlegen. Auch können in der Datenstruktur Informationen gespeichert sein, die Auskunft über die verfügbaren bzw. beim Gerät interpretierbaren Befehle wie auch deren Argumente enthalten. Gesamtheitlich gesehen, kann in der Datenstruktur also eine kommunikationstechnische Spezifikation für die jeweilige Geräteart hinterlegt sein.

So lassen sich z.B. bei der Realisierung des Geräts als elektronische Anzeigeeinheit Bilddaten im für die Anzeigeeinheit verständlichen Daten-Format übertragen und der Status des Empfangs bzw. der Umsetzung am Bildschirm usw. abfragen. Gleiches gilt auf analoge Weise auch für andere Geräte mit anderen Funktionen, wie etwas Sensoren oder Bilderfassungseinrichtungen usw.

Auch kann implementiert sein, dass bei einer erstmaligen Erfassung eines Geräts dessen Spezifikationsdaten, die in einer vordefinierten und für die Versorgungseinrichtung verständlichen und in Folge auch verwertbaren Form gespeichert sind, von dem Gerät abgerufen und in der Datenstruktur gespeichert werden, um in Folge effizient mit dem Gerät kommunizieren bzw. interagieren zu können. Ebenso können die Spezifikationsdaten systemweit in einer übergeordneten elektronischen Verwaltungsinstanz (z.B. bei einem zentralen Verwaltungsserver bzw. cloudbasiert gespeichert) verwaltet sein und die Spezifikationsdaten erst nach Erfassung der Identifikationsdaten unter Berufung auf diese Identifikationsdaten von dieser zentralen Verwaltungsinstanz bezogen und danach in der Datenstruktur der Versorgungseinrichtung gespeichert werden.

Weiterhin hat es sich als äußerst vorteilhaft erwiesen, dass jedes elektronische Gerät, ein Sicherheitselement aufweist, mit dessen Hilfe es eindeutig gegenüber der Versorgungseinrichtung authentifiziert werden kann, es also gegenüber der Versorgungseinrichtung authentifizierbar ist. Diese Sicherheitselement kann softwarebasiert und/oder hardwarebasiert, wie z.B. mit einem "Security Chip" (auch in Englisch "Secure-Element" genannt) gebildet sein. Bei der Authentifizierung kann ein Schlüssel-Paar zum Einsatz kommen ist. Das Sicherheitselement erlaubt eine Authentifizierung für jedes Gerät gegenüber der Versorgungseinrichtung, bevor es mit der Versorgungseinrichtung gerätespezifisch interagierten kann bzw. darf. Unter dem Begriff der Authentifizierung ist ein Prozess oder Vorgang zu verstehen, welcher der Identifizierung und Überprüfung der Identität des betroffenen Gerätes dient. Nur Geräte, die sich bei der Versorgungseinrichtung authentifizieren können, sind für die Verwendung mit der Versorgungseinrichtung zugelassen. Dies kann mit an sich bekannten Methoden implementiert sein, wie sie im Bereich der "Machine-to-Machine communication (M2M)" oder Internet-of-Things (IoT) bekannt sind, wie etwa "X.509 certificates", "Trusted Platfom Module (TPM)" oder "symmetric key".

Zwecks Authentifizierung kann z.B. in den Identifikationsdaten neben dem Adressanteil auch ein Authentifikationsteil an Daten enthalten sein, welcher es der Versorgungseinrichtung erlauben, bereits im Erfassung-Modus das betroffene Gerät zu authentifizieren. Scheitert die Authentifizierung, verweigert die Versorgungseinrichtung die Selektion des betroffenen Geräts für den Individual-Kommunikationsmodus.

Zwecks Authentifizierung kann jedoch auch vorsehen sein, dass die Erfassung der Geräte ohne unmittelbare Authentifizierung erfolgt und erst danach zu Beginn des Individual-Kommunikationsmodus die Authentifizierung geprüft wird, bevor tatsächlich gerätespezifisch mit einem authentifizierten Gerät kommuniziert werden kann. Ist eine Authentifizierung eines Geräts nicht möglich, verweigert die Versorgungseinrichtung die weitere Kommunikation mit dem betroffenen Gerät und beendet den Individual-Kommunikationsmodus.

Weiterhin kann mit Hilfe der übergeordneten Verwaltungsinstanz eine Authentifizierung von durch eine Versorgungseinrichtung erfassten Geräten durchgeführt werden, sodass - abgesehen von der reinen Erfassung der Identifikationsdaten - solche Geräte erst durch die Verwaltungsinstanz für die Verwendung im Bussystem, insbesondere mit einer bestimmten Versorgungseinrichtung, freigegeben bzw. zuglassen werden müssen, was der betreffenden Versorgungseinrichtung auch von der Verwaltungsinstanz mitgeteilt wird, bevor die Versorgungseinrichtung mit dem betreffenden Gerät überhaut zusammenarbeiten darf bzw. kann. Dies kann bevorzugt einmalig nötig sein, um ein neu in das System aufgenommenes Gerät für die betreffende Versorgungseinrichtung verfügbar zu machen. Gleiches gilt für den Fall, dass ein Gerät von einer Versorgungseinrichtung zu einer anderen Versorgungseinrichtung vertragen wurde.

Die Versorgungseinrichtung kann also eine Steuerung aufweisen, welche die Zulassung zur Zusammenarbeit mit der an ihrem Bussystem befindlichen Geräte prüft und nur dann, wenn diese Zulassung im Sinne der Authentifizierung vorliegt, mit dem betreffenden Gerät gerätespezifisch im Hochgeschwindigkeit-Kommunikationsvorgang kommuniziert, oder ggf. schon vorab keine Selektion für dieses Gerät durchführt, wenn die Zulassung nicht existiert.

Die Authentifizierung kann jedoch auch für die Versorgungseinrichtung vorgesehen sein, sodass nur eine gegenüber der bzw. durch die zentrale Verwaltungsinstanz authentifizierte Versorgungseinrichtung in dem System betrieben werden kann.

Die erfolgreiche Authentifizierung kann bei einem Gerät oder auch bei einer Versorgungseinrichtung durch eine optisch wahrnehmbare Statusanzeige repräsentiert sein. Dies kann z.B. über einen Bildschirm erfolgen. Diese visuelle Anzeige kann durch z.B. eine LED erfolgen, die ein Licht im für das menschliche Auge wahrnehmbaren Spektralbereich oder ein Licht im Spektralbereich außerhalb des menschlich wahrnehmbaren Spektralbereichs zur maschinellen Verarbeitung aussendet.

Mit der erörterten Authentifizierung kann sichergestellt werden, dass nur zugelassene Geräte in dem System bzw. in dem Bussystem zur Anwendung kommen können. Diese Zulassung kann für individuelle Geräte vorliegen. Sie kann aber auch gruppenweise vorliegen, wie z.B. für Gerätetypen oder Geräteklassen aber auch herstellerspezifisch sein. Damit lässt sich auf zuverlässige Weise der Einsatz von qualitativ minderwertigen Nachbauten oder von Versorgungseinrichtungen wie auch Geräten mit fraglicher Herkunft unterbinden, was erheblich zur Systemqualität beiträgt, weil diese Maßnahme einen zuverlässigen Schutz vor Einschleusung von Schadsoftware oder auch die Verwendung von nicht zertifizierter (ggf. auch nicht spezifikationskonformer) Hardware verhindert. Darüber hinaus ermöglichen diese Maßnahmen ein Geschäftsmodell, das den Einsatz verschiedenster elektronischer Geräte ermöglicht, wobei unterschiedliche Gerätehersteller ihre spezifische Kernkompetenz einbringe können, zugleich jedoch deren Zugang zum System kontrolliert und in Abstimmung mit den geschäftlichen wie auch strategischen Interessen des System-Anbieters erfolgt. Analog verhält es sich mit den Versorgungseinrichtungen.

Gleiches gilt auf analoge Weise für den eingangs bereits angesprochene externen Energiespeicher (Batteriepaket) zur Versorgung der Versorgungseinrichtung, der auch mit besagtem Sicherheitselement für die genannten Zwecke (Identifikation / Authentifizierung) ausgerüstet sein kann.

Sobald eine individuelle Kommunikation im Individual-Kommunikationsmodus beendet wurde, was dem Gerät mit einem Befehl mitgeteilt werden kann oder sich aus den Umständen der Kommunikation automatisch ergeben kann, verändert das Gerät seinen Betriebsmodus und begibt sich in den Bussystem-Inaktivitätsmodus.

Ab nun kann der Gesamtprozess inklusive einleitender Veränderung der Versorgungsspannung von Anfang an neue gestartet werden, wenn von der Versorgungseinheit aus ein Erfassung- und Kommunikationsbedarf mit einem der Geräte besteht. Auch kann vorgesehen sein, dass nach der einleitenden Veränderung der Versorgungsspannung kein neuerlicher, vollständiger Erfassungsprozess durchlaufen wird, sondern aufgrund der bereits erfassten Identifikationsdaten im langsamen Kommunikationsvorgang eines der Geräte selektiert wird, ohne dass die anderen Geräte ihre Identifikationsdaten neuerlich abgeben müssen. Nach der Selektion können im schnellen Kommunikationsvorgang Daten mit dem selektierten Gerät ausgetauscht werden.

Damit eine Kommunikation zwischen einem Gerät und der Versorgungseinrichtung nicht nur ausschließlich durch die Versorgungseinrichtung gestartet werden kann, sind die Geräte und die Versorgungseinrichtung derart konfiguriert, dass sie auch ohne die kommunikationseinleitende Veränderung der Versorgungspannung durch die Versorgungseinrichtung auskommen. Dazu ist auf der Seite der Geräte vorgesehen, dass das Gerät einen Verbindungsstart-Modus aufweist, in dem das Gerät dazu konfiguriert ist, durch die temporäre Herstellung einer, bevorzugt hochohmigen, Belastung der zumindest einen dritten Leitung der Versorgungseinrichtung seinen Bedarf eines Verbindungsaufbaus gegenüber der Versorgungseinrichtung anzuzeigen. Weiterhin ist das Gerät im Anschluss an den Verbindungsstart-Modus zum Einnehmen seiner Betriebsmodi, nämlich des Identifikation-Modus gefolgt vom Individual-Kommunikationsmodus wie vorangehend erörtert konfiguriert.

Auf der Seite der Versorgungseinrichtung ist vorgesehen, dass die Versorgungseinrichtung dazu ausgebildet, eine temporäre, im Wesentlichen hochohmige, Belastung der einen dritten Leitung durch ein an das Bussystem angeschlossenes Gerät zu erkennen, ggf. auch zu unterscheiden, wie viele angeschlossene Geräte gleichzeitig die Belastung erzeugen. Als Folge des Erkennens der Belastung ist die Versorgungseinrichtung zum Einnehmen seiner Betriebsmodi, nämlich des Erfassung-Modus gefolgt vom Individual-Kommunikationsmodus konfiguriert.

Es ist also nicht die Gesamtheit der am Bussystem installierten Geräte aktiviert, um die individuellen Identifikationsdaten an die Versorgungseinrichtung abzugeben. Vielmehr wird die Versorgungseinrichtung durch eine gezielte Veränderung des Signalniveaus auf der für den Signa- bzw. Datenverkehr vorgesehenen zumindest einen dritten Leitung aktiviert, um im Erfassung-Modus nun die Identifikationsdaten von den die zumindest eine dritte Leitung belastenden Geräten abzurufen.

Dies kann das Abrufen der Identifikationsdaten von nur einem einzigen Gerät betreffen, um danach unmittelbar (also ohne die Notwendigkeit des Selektionsbefehls) individuell mit diesem einzigen Gerät im Hochgeschwindigkeit-Kommunikationsvorgang zu kommunizieren.

Wie erwähnt, kann die hochohmige Belastung der zumindest einen dritten Leitung jedoch auch durch gleichzeitige Belastung mehrerer Geräte zustande kommen. Dabei stellt sich auf der zumindest einen dritten Leitung ein Signalniveau ein, das durch einen Spannungsteiler bestimmt ist. Der Spannungsteiler ist durch einen Widerstand auf der Seite der Versorgungseinrichtung einerseits und durch die dazu in Serie geschaltete Parallelschaltung der hochohmigen Widerstände der die zumindest eine dritte Leitung belastenden Geräte gebildet. Zwischen dem Widerstand der Versorgungseinrichtung und der Parallelschaltung der hochohmigen Widerstände der Geräte verläuft die zumindest eine dritte Leitung. Der Spannungsteiler ist in der Versorgungseinrichtung mit Spannung versorgt und in den Geräten mit dem Bezugspotential verbunden. Somit kann in der Versorgungseinrichtung das sich entsprechend der Anzahl der belastenden Geräte einstellende Signalniveau direkt auf der zumindest einen dritten Leitung abgegriffen und mit dem Analog-Digital-Wandler der Versorgungseinrichtung verarbeitet werden. Da die Werte der hochohmigen Widerstände, der Wert des internen Widerstands der Versorgungseinrichtung und der Wert der den Spannungsteiler versorgenden Spannung bekannt sind, kann der Mikrocontroller genau berechnen, wie viele Geräte gleichzeitig die zumindest eine dritte Leitung belasten. In dem Erfassung-Modus können dann die Identifikationsdaten für die zuvor rechnerisch ermittelte Anzahl der Geräte empfangen werden. Es kann allerdings auch diese Berechnung unterbleiben und die Erfassung der Identifikationsdaten wie vorangehend erörtert ohne Kenntnis der Anzahl der Geräte erfolgen.

In weiterer Folge wird wieder nur mit einem der erfassten Geräte nach dessen Selektion individuell auf rasche Weise kommuniziert. Die anderen erfassten Geräte können in einem Bereitschaftszustand verharren und die zumindest eine dritte Leitung überwachen.

Sobald die individuelle rasche Kommunikation mit dem ersten selektierten Gerät beendet ist, kann die Versorgungseinheit unter Auslassung des Erfassung-Modus direkt in den Niedergeschwindigkeit-Kommunikationsvorgang wechseln und das nächste zuvor schon erfasste Gerät selektieren und dann im Individual-Kommunikationsmodus kommunikationstechnisch bedienen. Dies kann so oft weiderholt werden, bis alle zuvor schon erfassten Geräte, welche die zumindest eine dritte Leitung hochohmig belasteten, kommunikationstechnisch bedient wurden.

Zur Abrundung der allgemeinen Beschreibung sei an dieser Stelle noch eine Übersicht über die verschiedenen Komponenten und Funktionen des vorangehend detailliert erörterten Systems gegeben.

Die Versorgungseinrichtung stellt im System folgende Funktionen zur Verfügung. Sie kann die am Bussystem verfügbare Versorgungsspannung abschalten, um Energie zu sparen. Dies kann zum Beispiel während der Nacht sinnvoll sein oder wenn ein Fehler im Bussystem erkannt wurde. Sie kann die Strombegrenzung angepasst an die jeweiligen Bedürfnisse im Bussystem ändern. Für den Fall, dass im Bussystem ein Bedarf an einer höheren Spannung oder an einer höheren Leistung besteht, wenn zum Beispiel eine LED zu aktivieren ist oder ein Update eines Bildschirms nötig ist oder eine Kamera betrieben werden muss, kann sie auch die Versorgungsspannung, zumindest temporär, an diese Bedürfnisse anpassen, insbesondere erhöhen. Sie kann die für die Signal- bzw. Datenübertragung vorgesehene zumindest eine dritte Leitung hinsichtlich ihres Signalniveaus hin zum Wert der Versorgungsspannung ziehen und wie erörtert einen Analog-Digital-Wandler benutzen, um zu detektieren, dass eines der Geräte diese Leitung hinsichtlich ihres Signalniveaus in Richtung des Bezugspotentials zieht bzw. belastet. Dies kann dazu benutzt werden, zu erkennen, dass ein Gerät neu mit dem Bussystem verbunden wurde und von sich aus eine Kommunikation mit der Versorgungseinrichtung anstrebt, um von dieser registriert zu werden. Dies kann jedoch auch dafür verwendet werden, dass eines der bereits mit dem Bussystem verbunden Geräte von sich aus einen "Aufmerksamkeitsalarm" auslöst und damit anzeigt, dass es in eine Kommunikation mit der Versorgungseinrichtung eintreten möchte, wobei in dieser Kommunikation dann Details für den Grund des Aufmerksamkeitsalarms übermittelt werden können. Die Versorgungseinrichtung kann auch einen sogenannten "Bus-Reset" ausführen, bei dem die im Bussystem verfügbare Versorgungsspannung kurzfristig ausgeschaltet wird. Dieser Bus-Reset ist mit der eingangs erörterten, temporären Veränderung der Versorgungsspannung gleichzusetzen. Wie erwähnt, ist sie auch zur Kommunikation mit niedriger Geschwindigkeit (100k Boud) mit "open drain" angekoppelten Geräten ausgebildet, um grundlegende Kommandos, die von allen Geräten verstanden werden, und einen Erfassungsvorgang zum Erfassen aller an dem Bussystem verfügbaren Geräte durchführen zu können. Weiterhin ist sie auch - wie erwähnt - für eine Kommunikation mit hoher Geschwindigkeit (ca. 1000k Boud) ausgebildet, wobei der Universal Asynchronous Receiver Transmitter (UART) zur Anwendung kommt, um größere, aber auch kleinere Datenmengen rasch hin zu einem einzigen Gerät übertragen oder von diesem empfangen zu können. In dieser Hochgeschwindigkeitskommunikation wird gerätespezifisch (bidirektional) kommuniziert. Die Versorgungseinrichtung überwacht das Bussystem auch auf Fehler, die beispielsweise dadurch erkannt werden, dass die zumindest eine dritte Leitung für mehr als 1 ms auf dem logischen Niveau "low" gehalten ist.

Jedes Gerät kann in einen Niedrig-Energiemodus eintreten, in dem eine möglichst geringe Leistungsaufnahme vorliegt. Dafür reicht es oft aus, dass der im Gerät vorgesehene Mikrocontroller angehalten wird und gegebenenfalls andere funktionale Blöcke weiterhin mit der im Gerät lokal erzeugten Versorgungsspannung betrieben werden. Insbesondere kann jedoch auch vorgesehen sein, dass die im Gerät lokal vorgesehene Versorgungsspannungserzeugung vollständig abgeschaltet wird. Dies ist deshalb möglich, weil die Versorgungseinrichtung ja die Funktion bereitstellt, eine temporäre Veränderung der Versorgungsspannung am Bussystem zu verursachen. Diese Versorgungsspannungsveränderung kann auf der Seite des Geräts dazu benutzt werden, um die im Gerät vorgesehene Versorgungsspannungserzeugung wieder einzuschalten bzw. zu starten. Grundsätzlich kann das Gerät automatisch eingeschaltet werden, wenn zum Beispiel sein Hauptschalter manuell betätigt wird, das Gerät an das Bussystem angeschlossen wird, die Versorgungseinheit den Bus-Reset durchgeführt, oder mit Hilfe eines optionalen vorgesehenen NFC-Moduls mit Hilfe eines externen NFC-Devices (in einem Smart-Phone oder einem PDA usw. integriert) ein Start des Geräts initiiert wird. Zusammengefasst ist das Gerät dazu ausgebildet, den Bus-Reset zu detektieren und eine Veränderung seines Betriebsmodus einzuleiten, die zumindest eine dritte Leitung schwach zu belasten, um seine Anwesenheit anzuzeigen oder den erwähnten Alarm auszusenden; die langsame "open drain" gekoppelte Kommunikation durchzuführen, um seine Identifikationsdaten, insbesondere seine Adresse, bekannt zu geben; die rasche UART-basierte Kommunikation für den individuellen Datentransfer mit der Versorgungseinrichtung durchzuführen; und sich von der zumindest einen dritten Leitung zu entkoppeln bzw. abzukoppeln, um seinen Einfluss während der Hochgeschwindigkeitskommunikation zwischen der Versorgungseinrichtung und einem anderen Gerät zu minimieren beziehungsweise zu vermeiden.

Das Bussystem kann verschiedenste Zustände repräsentieren, die nachfolgende zusammengefasst sind.

In einem "power down" Zustand ist die Versorgungsspannung abgeschaltet. Die zumindest eine dritte Leitung ist auf das logische Niveau "high" gezogen, um gegebenenfalls einen Kurzschluss oder auch eine Belastung durch ein Gerät detektierbar zu machen.

In einem "low power" Zustand wird das Bussystem mit Hilfe einer Batterie mit elektrischer Leistung versorgt. Die zumindest eine dritte Leitung ist auf das logische Niveau "high" gezogen, um gegebenenfalls einen Kurzschluss oder auch eine Belastung durch ein Gerät detektierbar zu machen. Geräte, die beispielsweise eine Anzeigeeinheit mit E-Paper Bildschirm bilden, können ihre interne Versorgungspannung abgeschaltet haben. Geräte, die beispielsweise eine Anzeigeeinheit mit LCD-Bildschirm haben, können ihren internen Mikrocontroller abgeschaltet haben und nur den LCD-Bildschirm mit ihrer internen Versorgungsspannung betreiben. Sensor-Geräte können periodisch aufwachen, um Messungen durchzuführen beziehungsweise physikalische Parameter mit Hilfe ihrer Sensorelemente zu erfassen. Alle diese Geräte können dabei von der zumindest einen dritten Leitung entkoppelt sein.

In einem "Anwesenheit - bzw. Alarmierung" Zustand kann jedes Gerät die zumindest eine dritte Leitung auf das logische Niveau "low" ziehen, Um eine Kommunikation mit der Versorgungseinrichtung anzufordern, was im Wesentlichen die Bedeutung eines Alarms haben kann. Jedes neue mit dem Bussystem verbundene Gerät kann durch eine schwache Belastung der zumindest einen dritten Leitung seine Anwesenheit anzeigen. Die Versorgungseinrichtung kann in den Erfassung-Modus eintreten, ohne andere Geräte aus ihrem Ruhezustand aufwecken zu müssen.

In einem "Bus-Reset" Zustand kann die Versorgungseinrichtung die Versorgungsspannung aus- und einschalten, um die Geräte zu starten. Danach kann der Erfassung-Modus eingenommen werden, um die Identifikationsdaten, insbesondere Adressen, der individuellen Geräte zu erfassen.

In einem "Niedriggeschwindigkeit-Kommunikation" Zustand sind die Geräte mit der zumindest einen dritten Leitung des Bussystems "open drain" gekoppelt und jedes Gerät kann die Leitung auf das logischen Niveau "low" ziehen. Dieser Modus wird durch den Bus-Reset eingeleitet. Dieser Modus dient der Erfassung der Geräte am Bussystem, wobei beispielsweise 48 Bit für eine individuelle Identifikation der Geräte vorgesehen sind. Mit Hilfe eines Befehls können sich alle Geräte mit Ausnahme eines selektierten Geräts vom Bussystem abkoppeln.

In einem "Hochgeschwindigkeit-Kommunikation" Zustand kann eine bidirektionale Kommunikation stattfinden. Dabei kommuniziert die Versorgungseinrichtung nur mit einem einzigen selektierten Gerät, um beispielsweise im Falle einer Anzeigeeinheit Bilddaten zu übertragen.

Ein "Fehler" Zustand liegt vor, wenn sich die zumindest eine dritte Leitung für eine Zeitspanne auf dem logischen Niveau "low" befindet, die länger dauert, als dies bei einer Kommunikation sein darf; wenn eine zu hohe Stromaufnahme festgestellt wird; wenn die zumindest eine dritte Leitung nicht auf das logische Niveau "low" oder "high" gezogen werden kann. Als Reaktion auf die Erkennung dieses Fehler-Zustands kann die Versorgungseinrichtung die Versorgungsspannung abschalten, bis der Fehler nicht mehr vorliegt. Zu diesem Zweck kann die Versorgungseinrichtung dazu konfiguriert sein, periodisch zu prüfen, ob der Fehler noch vorliegt oder beseitigt wurde.

Ein System, welches das Bussystem inklusive Versorgungseinrichtung und zumindest ein Gerät umfasst, weist somit zwei Signalisierungsmodi und zwei Kommunikationsmodi auf.

Im ersten Signalisierungsmodus steht die temporäre Veränderung der Versorgungsspannung zum Einleiten einer Änderung eines Betriebsmodus durch die Versorgungeinrichtung zur Verfügung.

Im zweiten Signalisierungsmodus steht die (auch temporäre) hochohmige Belastung der zumindest einen dritten Leitung zum Einleiten einer Änderung eines Betriebsmodus durch das zumindest eine Gerät zur Verfügung.

Im ersten Kommunikationsmodus steht der Niedriggeschwindigkeit-Kommunikationsvorgang zur Selektion von einem einzigen Gerät, ggf. auch mit vorgelagerter Erfassung der Geräte und zur Steuerung der Geräte mit einem eingeschränkten Befehlssatz, insbesondere geräteübergreifend verfügbaren Befehlssatzes (und/oder Parameter-Umfangs), was alle mit dem Bussystem kompatiblen Geräte verstehen, durch die Versorgungseinrichtung zur Verfügung.

Im zweiten Kommunikationsmodus steht der Hochgeschwindigkeit-Kommunikationsvorgang zur bidirektionalen Kommunikation zwischen der Versorgungseinrichtung und genau dem einen selektierten Gerät, insbesondere mit einem gerätespezifischen, individuellen Befehlssatz bzw. Funktionsumgang, der gemäß einer Geräteart, eines Gerätetyps bzw. einer Geräteklasse oder Gerätegruppe, welcher das Gerät zugeordnet ist, oder individuell für das selektierte Gerät zur Verfügung steht.

Weiterhin kann vorsehe sein, dass sich entlang der Regalschiene maschinell lesbare, insbesondere optisch lesbare, Marken befinden, die es jedem Gerät erlauben, an der Regalschiene befestigt seine Position zu bestimmen. Die Geräte können an ihrer Rückseite eine darauf abgestimmte Lese-Einrichtung, insbesondere einen optischen Leser (z.B. eine Mini-Kamera), aufweisen, mit dessen Hilfe die Marken erfassbar sind, sodass die mit ihrer Hilfe bereitgestellte Positionsinformation von der Elektronik des Geräts weiter verarbeite werden kann.

Weiterhin kann das beschriebene System auch zur Ortung von Ortsunbekannten elektronischen Geräten ausgebildet sein. Dabei wird die Position eines an der Tragevorrichtung (z.B. Regalschiene) verorteten elektronischen Geräts durch Ortsbestimmung der Versorgungseinrichtung örtlich eingegrenzt. Die Bestimmung der Position der Versorgungseinrichtung in Bezug auf die ortsbekannten Access-Points erfolgt hierbei durch Verwendung einer Ultrabreitband-Funkkommunikation zwischen den Access-Points und der Versorgungseinrichtung. Mit dieser Maßnahme geht der Vorteil einher, dass in Abkehr von bekannten Maßnahmen die Ortsbestimmung für ein, jedoch auch mehrere, elektronische Geräte nicht mehr davon abhängig ist, dass die absolute Position anderer elektronischer Geräte bekannt ist, die bei diesen bekannten Maßnahmen als statische Ankerpunkte für die Positionsbestimmung dienen. Vielmehr kommen nun dynamische Ankerpunkte realisiert durch die Versorgungseinrichtungen zum Einsatz. Diese können im Laufe der Zeit ihre Position im Raum verändern, zum Beispiel durch ein Umstellen des Regals oder auch ein Umsortieren der Regalböden, an denen die Regalschienen befestigt sind. Bevor also eine Ortsbestimmung für ein elektronisches Gerät erfolgt, wird zunächst eine Ortsbestimmung für die Versorgungeinrichtung durchgeführt und - wenn nötig - darauf aufbauend, also bezogen auf diese Position der Versorgungseinrichtung, die Position eines elektronischen Geräts ermittelt bzw. eingegrenzt. Dabei kommt letztendlich der Umstand zum Tragen, dass sich das elektronische Gerät, dessen Position zu ermitteln bzw. einzugrenzen ist, an der Tragevorrichtung befindet, an der auch die jeweils betroffene Versorgungseinrichtung vorgesehen bzw. lokalisiert ist. Sobald also die jeweilige Position der Versorgungseinrichtung ermittelt wurde, ergibt sich die Position des mit Hilfe der betreffenden Versorgungseinrichtung versorgten elektronischen Geräts de facto automatisch, weil dieses nur an der betreffenden Tragevorrichtung positioniert sein kann. Im vorliegenden Kontext ist unter einer Ultrabreitband-Funkkommunikation eine Funkkommunikation basierend auf Ultra-Breitband-Technologie (UWB; engl.: Ultra-Wideband) zu verstehen. Wichtigstes Merkmal ist die Nutzung extrem großer Frequenzbereiche mit einer Bandbreite von mindestens 500 MHz oder von mindestens 20 % des arithmetischen Mittelwertes von unterer und oberer Grenzfrequenz des genutzten Frequenzbereiches. Bei dem hier angesprochenen Verfahren basiert die Bestimmung der Position der elektronischen Versorgungseinrichtung auf Abstandsbestimmung zwischen ihr und jedem der involvierten Access-Points unter Ausnutzung der jeweiligen Ultrabreitband-Funkkommunikation. Dabei kommt eine "Flight-of-Time" Messung, ggf. auch eine "Angle-of-Arrival" Bestimmung zum Einsatz. Damit geht eine sehr präzise Bestimmung des Orts der jeweiligen Versorgungseinrichtung durch nachfolgende Maßnahmen wie z.B. Triangulation usw. einher. Zur Implementierung dieser Maßnahme müssen lediglich die Access-Points wie auch die Versorgungseinrichtungen mit UWB-Funkmodulen ausgerüstet sein und die erfassten UWB-Funk-Messdaten an eine zentrale Datenverarbeitungseinrichtung übermittelt werden, wo darauf aufbauend die exakten Positionen der Versorgungseinrichtungen im Raum (im Geschäftslokal) ermittelt werden.

Insbesondere dann, wenn die Versorgungseinrichtung zum Kommunizieren gemäß einem standardisierten Kommunikationsprotokoll (z.B. ZigBee ^{®}, Bluetooth ^{®} Low Energy, WLAN, usw.) mit einem Access-Point ausgebildet ist und mit der erwähnten Batterie elektrisch versorgt wird, hat es sich als äußerst vorteilhaft erwiesen, dass sie einen Schlaf-Zustand aufweist, in dem keine Funk-Kommunikationsbereitschaft zur Kommunikation mit dem Access-Point besteht, und einen Aktiv-Zustand aufweist, in dem eine Funk-Kommunikationsbereitschaft mit dem Access-Point besteht, um energiesparend betrieben zu werden. Um die kommunikationstechnische Verfügbarkeit der Versorgungseinrichtung sicherzustellen, hat es sich als vorteilhaft erwiesen, dass der Access-Point einen zusätzlichen Aufweck-Sender aufweist, der dazu ausgebildet ist, ein Aufweckfunksignal mit einer Adressierungsinformation auszusenden. Mit Hilfe der Adressierungsinformation kann eine bestimmte Versorgungseinrichtung oder eine Gruppe solcher Versorgungseinrichtungen adressiert werden. Jede der Versorgungseinrichtungen weist zusätzlich einen extrem energiesparenden Aufweck-Empfänger auf, der dazu ausgebildet ist, das Aufwecksignal zu empfange und zu prüfen, ob die betreffende Versorgungseinrichtung adressiert ist. Bei festgestellter Adressierung wird die Versorgungseinrichtung aus ihrem Schlaf-Zustand aufgeweckt und steht sodann für die Kommunikation mit ihrem Access-Point im standardisierten Kommunikationsprotokoll zur Verfügung.

Um einen Betrieb eines elektronischen Gerätes auch dann zu ermöglichen, wenn es nicht unmittelbar durch die Versorgungseinrichtung elektrisch versorgt wird, hat es ich als vorteilhaft erwiesen, dass das elektronische Gerät - neben dem/den üblicherweise vorgesehenen Pufferkondensatoren oder Stützkondensatoren - auch einen wieder aufladbaren Langzeit-Energiespeicher aufweist. Dieser ist für einen zumindest temporären autonomen Betrieb der Elektronik des elektronischen Geräts währende einer Zeitspanne vorgesehen, in der keine elektrische Versorgung durch die Versorgungseinrichtung vorliegt. Geladen wird der Langzeit-Energiespeicher immer dann, wenn das elektronische Gerät mit der Versorgungseinrichtung elektrisch verbunden ist, also wenn es an der Tragevorrichtung befestigt ist. Weiterhin kann implementiert sein, dass zwischen der Tragevorrichtung und dem betreffenden elektronischen Gerät abgestimmt wird, ob der Langzeit-Energiespeicher zum gegebenen Zeitpunkt tatsächlich geladen werden soll bzw. darf oder dies zu einem anderen Zeitpunkt erfolgen soll, weil z.B. die Ladung des Batteriespeichers der Versorgungseinrichtung gegenwärtig ein ungünstig niedliches Niveau erreicht hat. Ebenso kann die erlaubte Ladezeit verhandelt bzw. abgestimmt werden. In dem elektronischen Gerät kann der Langzeit-Energiespeicher z.B. dann die elektrische Versorgung übernehmen, wenn das elektronische Gerät von der Tragevorrichtung entnommen wurde und folglich keine direkte Versorgung durch die Versorgungseinrichtung mehr möglich ist. So können auch nach Loslösung des elektronischen Geräts von der Tragevorrichtung bei dem elektronischen Gerät Bildinhalte eines Bildschirms verändert werden, Bild oder Videoaufnahmen getätigt werden, physikalische Parameter erfasst werden oder auch Ein- bzw. Ausgaben in maschinell oder auch human-verständlicher Weise erfolgen. Der Langzeit-Energiespeicher kann gemäß der bevorzugten Ausbildungsform durch einen sogenannten "Superkondensator", kurz "Supercap", auch "Ultrakondensator" genannt, realisiert sein. Natürlich können auch weideraufladbare Batterien oder Akkumulatoren zum Einsatz kommen. Der Vorteil der erwähnten Superkondensatoren liegt jedoch in folgendem Sachverhalt. Ein Superkondensator, auch Ultrakondensator genannt, ist ein Hochleistungskondensator mit einem Kapazitätswert, der viel höher als bei anderen Kondensatoren ist, jedoch niedrigere Spannungsgrenzen aufweist und die Lücke zwischen Elektrolytkondensatoren und wieder aufladbaren Batterien überbrückt. Er speichert typischerweise 10-bis 100-mal mehr Energie pro Volumen- oder Masseneinheit als Elektrolytkondensatoren, kann Ladungen viel schneller als Batterien aufnehmen und abgeben und toleriert viel mehr Lade- und Entladezyklen als wieder aufladbare Batterien.

Ein weiterer Aspekt betrifft die visuell wahrnehmbare Signalisierung an der Tragevorrichtung, die über das hinausgeht, was z.B. mit einem Bildschirm eines der elektronischen Geräte erfolgen kann. Zu diesem Zweck kann ein elektronisches Gerät (wie im Übrigen bereits erwähnt auch zusätzlich zu seinem Bildschirm) eine Lichtabgabeeinheit, bevorzugt realisiert als LED aufweisen. Entsprechend der Positionen der elektronischen Geräte sind dann auch die Lichtabgabeeinrichtungen entlang der Tragevorrichtung verteilt. Damit lassen sich unter der Steuerung der individuellen Geräte oder zentral durch die Versorgungseinrichtung positionsspezifische Lichtsignale abgeben. Ebenso kann die Versorgungseinrichtung mit einer solchen Lichtabgabeeinheit ausgerüstet sein, sodass unter der Steuerung der Versorgungseinrichtung an der Position der Versorgungseinrichtung Lichtsignale abgegeben werden können. Auch kann vorgesehen sein, dass die mechanische Struktur der Tragevorrichtung an definierten, fixen Positionen die Lichtabgabeeinheiten aufweist und diese Lichtabgabeeinheiten mit der Versorgungseinrichtung lösbar elektronisch verbunden sind, sodass unter der Steuerung durch die Versorgungseinrichtung an den Positionen der Lichtabgabeeinrichtungen Lichtsignale abgegeben werden können.

Diese und weitere Aspekte der Erfindung ergeben sich durch die nachfolgend erörterten Figuren.

### Figurenkurzbeschreibung

Die Erfindung wird im Folgenden unter Hinweis auf die beigefügten Figuren anhand von Ausführungsbeispielen noch einmal näher erläutert, auf welche die Erfindung jedoch nicht beschränkt ist. Dabei sind in den verschiedenen Figuren gleiche Komponenten mit identischen Bezugszeichen versehen. Es zeigen auf schematische Weise:
- Fig. 1: einen Ausschnitt einer mechanischen Struktur eines Regals mit einer Regalschiene und einem Regalboden und seitlich an der Regalschiene angebrachter Versorgungseinrichtung;
- Fig. 2: das Regal, bei dem der Regalboden entfernt wurde, sodass eine darunter angeordnete Batteriekonfiguration zur elektrischen Versorgung der Versorgungseinrichtung sichtbar ist;
- Fig. 3: die Regalschiene mit an ihrer Front eingesetzten elektronischen Anzeigeeinheiten;
- Fig. 4: die Regalschiene mit der unvollständig eingesetzten Anzeigeeinheit;
- Fig. 5: die Regalschiene mit der in sie vollständig eingesetzten Anzeigeeinheit;
- Fig. 6: eine freigeschnittene perspektivische Ansicht der elektrischen Verbindung der Versorgungseinrichtung mit drei elektrischen Leitungen der Regalschiene;
- Fig. 7: die Ansicht gemäß der Figur 6 mit Blickrichtung von rechts und parallel zur Regalschiene;
- Fig. 8 ein: elektronisches Blockschaltbild der Versorgungseinrichtung und ihrer Verbindung mit den drei Leitungen;
- Fig. 9 ein: elektronisches Blockschaltbild einer elektronischen Anzeigeeinheit und ihrer Verbindung mit den drei Leitungen;
- Fig. 10: eine funktional reduzierte Variante eines mit den drei Leitungen betreibbaren Geräts;
- Fig. 11: eine zeitliche Folge von auf den Leitungen der Regalschiene auftretenden Signalzuständen im Verlauf einer Kommunikation zwischen der Versorgungseinrichtung und den elektronischen Geräten gemäß einem ersten Ausführungsbeispiel;
- Fig. 12A - 12B: eine weitere zeitliche Folge der auf den Leitungen der Regalschiene auftretenden Signalzustände gemäß einem zweiten Ausführungsbeispiel.

### Beschreibung der Ausführungsbeispiele

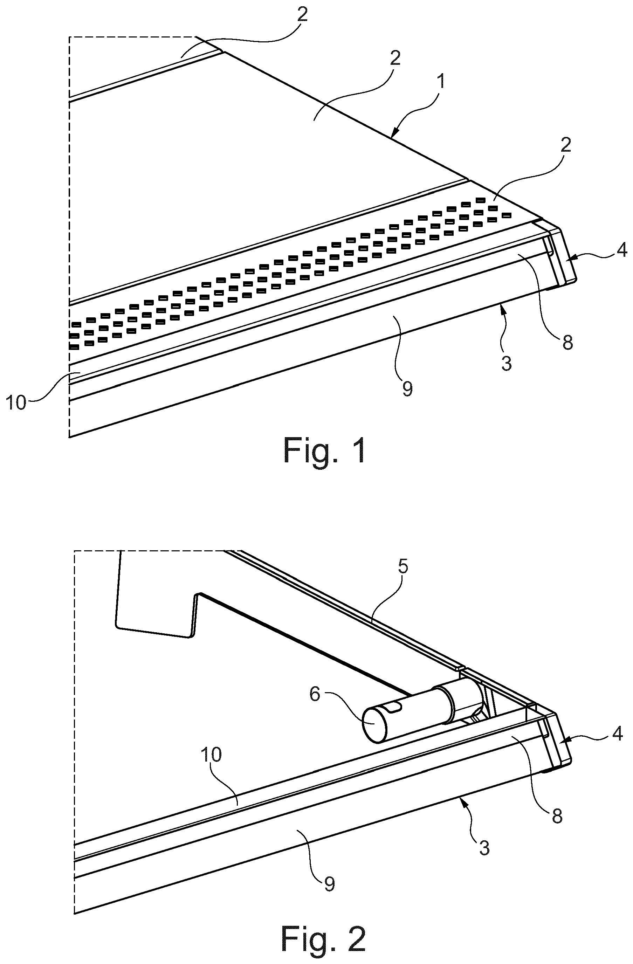

In der Figur 1 ist ein Ausschnitt eines aus Stahl gefertigten Regals 1 dargestellt, von dem ein Regalboden 2 und eine Regalschiene 3 sowie eine seitlich in die Regalschiene 3 eingesetzte elektronische Versorgungseinrichtung 4 zu sehen ist.

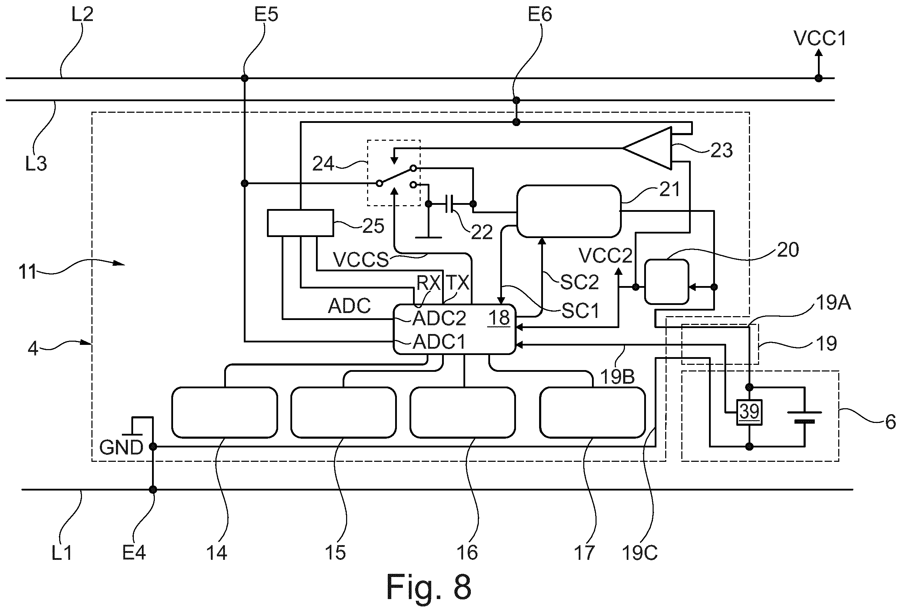

In der Figur 2 ist besagter Ausschnitt des Regals 1 dargestellt, wobei der Regalboden 2 entfernt wurde. Somit ist ein seitlicher Träger 5 sichtbar, an dem eine Batteriekonfiguration 6 befestigt ist, die zur elektrischen Versorgung der Versorgungseinrichtung 4 vorgesehen ist. Die Batteriekonfiguration 6 ist mit der Versorgungseinrichtung 4 durch ein Kabel 19 (in der vorliegenden Perspektive nicht sichtbar, jedoch in Figur 8 angedeutet) verbunden. Die Batteriekonfiguration 6 ist mit Hilfe von Magneten (hier nicht sichtbar) an dem Träger 5 befestigt.

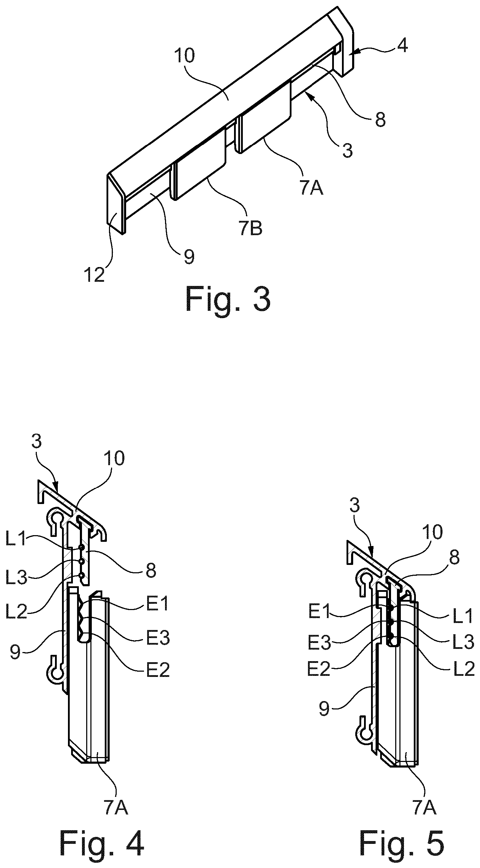

In der Figur 3 ist die Regalschiene 3 mit der Versorgungseinrichtung 4 und mit zwei an ihr befestigten Geräten, nämlich elektronischen Anzeigeeinheiten, also einer ersten Anzeigeeinheit 7A und einer zweiten Anzeigeeinheit 7B, nachfolgend als Electronic Shelf Label, abgekürzt ESL, bezeichnet, dargestellt. Die mechanische Befestigung der ESLs 7A und 7B erfolgt hier über einen Schnappmechanismus, der an der Rückseite der ESLs 7A und 7B mit entlang einer Referenzwand bzw. Hauptwand 9 der Regalschiene 3 ausgebildeten Ausnehmungen (in dieser Perspektive nicht sichtbar) zusammenwirkt, so dass das jeweilige ESL 7A bzw. 7B nach oben gegen den oberen Teil (nachfolgend obere Deckenwand 10 genannt) der Regalschiene 3, der das ESL 7A bzw. 7B von oben her einfasst, gedrückt wird und dort zwischen die Hauptwand 9 und die leicht nach vorne unten geneigte Deckenwand 10 eingespreizt gehalten wird. Details dieses Schnappmechanismus sind in den Figuren nicht dargestellt, weil der Fokus dieser Patentanmeldung auf den elektronischen Aspekten liegt. Im Folgenden ist daher auf diese elektronischen Aspekte im Detail eingegangen.

In den Figuren 4 und 5 ist ein Schnitt durch die Regalschienen 3 zwischen den ESLs 7A und 7B dargestellt. Deutlich zu sehen ist hier die aus Stahl gefertigte Struktur der Regalschienen 3 in einem Querschnitt und ein in diese Struktur an ihrem oberen Bereich eingesetzter Leitungsträger 8. Der Leitungsträger 8 ist aus Kunststoff gefertigt und weist drei entlang der Längserstreckung der Regalschiene 3 verlaufende elektrisch leitende Drähte L1, L2 und L3 (zum Beispiel Kupferdrähte) auf, die ohne Isolation direkt in die Oberfläche des Leistungsträgers 8 eingesetzt sind und so hoch aus dem Leitungsträger 8 herausragen, dass sie dort entlang des Leitungsträgers 8, im Wesentlichen entlang seiner gesamten Länge, problemlos mit Kontakten der ESLs 7A und 7B kontaktierbar sind. Die drei Drähte L1 bis L3 sind an jener zu der Referenzwand bzw. Hauptwand 9 der Regalschiene 3 hin orientierten Seite des Leitungsträgers 8 positioniert, so dass sie aus der Betrachtungsrichtung auf die Bildschirme der ESLs 7A und 7B nicht zu sehen sind.

Jedes ESL 7A und 7B weist eine kopfseitige Nut auf, in die der Leitungsträger 8 passt. Das ESL 7A bzw. 7B kann von unten her in die Regalschiene 3 eingeschoben werden, bis dass es an einer oberen Deckenwand 10 ansteht oder der Leitungsträger 8 den tiefsten Punkt der Nut erreicht hat. Zur Kontaktierung der drei Leitungen L1 bis L3 weist jedes ESLs 7A und 7B drei Kotaktelemente auf, die im vorliegenden Fall durch drei Stahlbänder gefertigt sind, die hier nicht im Detail zu sehen sind. Sie weisen an ihren Endabschnitten E1, E2 und E3, mit denen sie aus dem Gehäuse des jeweiligen ESLs 7A bzw. 7B herausragen (siehe Figur 4), gewölbt bzw. erhaben ausgebildete Kontaktzonen auf. Diese Endabschnitte E1 - E3 sind durch die Elastizität der Stahlbänder de facto gefedert gelagert und kontaktieren die gemäß ihrer Nummerierung angegebenen Leitungen L1 - L3, sobald das jeweilige ESL 7A bzw. 7B vollständig in die Regalschiene 3 eingesetzt ist, so wie dies in der Figur 5 zu sehen ist. Hier wirkt jedes Stahlband mit seiner Elastizität federnd, sodass eine druck- bzw. kraftbeaufschlagte Kontaktierung der Leitungen L1 bis L3 sichergestellt ist. Die Stahlbänder sind mit ausreichend Abstand zueinander, also zueinander berührungsfrei positioniert und parallel ausgerichtet.

Der Vollständigkeit wegen sei an dieser Stelle noch erwähnt, dass der Leitungsträger 8, die Referenzwand 9 und auch die obere Deckenwand 10 natürlich auch in den Figuren 1 und 2 zu sehen sind.

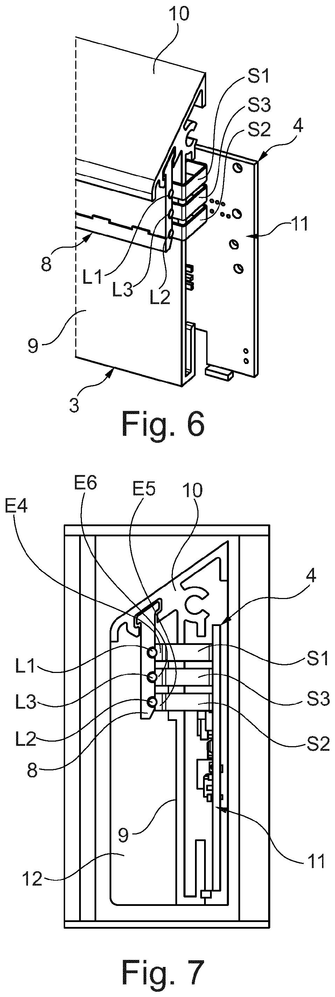

In weiterer Folge ist auf die elektrische Ankopplung der Versorgungseinrichtung 4 an die drei Leitungen L1 - L3 eingegangen, wobei in diesem Zusammenhang auf die Figuren 6 bis 7 verwiesen ist. In der Figur 6 ist ein Gehäuse wie auch eine für den Funkverkehr vorgesehene Antenne der Versorgungseinrichtung 4 entfernt worden, um den Blick auf eine Kopplung einer Vorrichtung-Elektronik 11 der Versorgungseinrichtung 4 mit den drei Leitungen L1 - L3 zu ermöglichen. Von der Vorrichtung-Elektronik 11 sind hier eine Printplatte und einige darauf angeordnete und durch nicht dargestellte Leiterbahnen verbundene elektronische Bauteile zu sehen, worauf jedoch nicht im Detail eingegangen ist. In dieser Ansicht sind drei Stahlbänder S1, S2 und S3 zu sehen, welche jeweils an einem ersten Endbereich mit der Elektronik 11 verbunden (z.B. verlötet) sind und an ihrem anderen, zweiten Endbereich E4, E5 und E6 eine gewölbte, bogenförmige Struktur als Kontaktzonen aufweisen. Mit diesen zweiten Endbereichen E4 bis E6 sind die Leitungen L1 bis L3 kontaktiert. Auch hier wirkt jedes Stahlband S1 - S3 mit seiner Elastizität federnd, sodass eine druckbeaufschlagte Kontaktierung der Leitungen L1 bis L3 sichergestellt ist. Die Stahlbänder S1 - S3 sind C- bzw. U-förmig ausgebildet und umfassen so das äußere Ende der Referenzwand 9 mit ausreichend Abstand dazu, damit diese aus Stahl gefertigte Referenzwand 9 nicht berührt wird. Weiterhin sind die Stahlbänder S1 - S3 mit ausreichend Abstand zueinander, also zueinander berührungsfrei positioniert und parallel zueinander ausgerichtet.

Erwähnt sei hier noch, dass in der Figur 7 wie auch schon in der Figur 3 eine linkseitiger Abschlussplatte 12 der Regalschiene 3 zu sehen ist, die im vorliegenden Fall aus Kunststoff gefertigt ist.

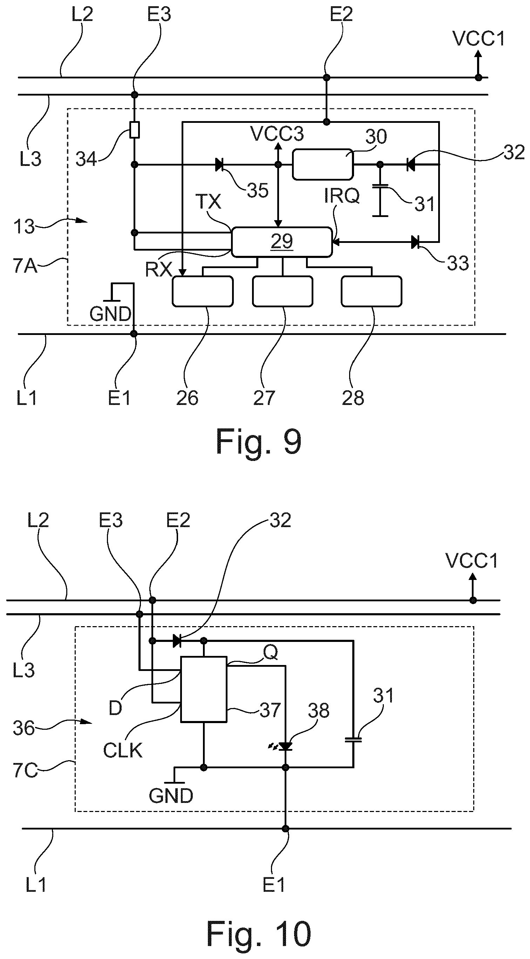

Die Versorgungseinrichtung 4 bildet zusammen mit den drei Leitungen L1 bis L3 ein Bussystem der Regalschien 3, an das - wie in der allgemeinen Beschreibung erörtert - unterschiedliche Geräte anschließbar sind, wobei sich die Erörterung hier nur auf die ESLs 7A und 7B und ein Gerät mit stark reduzierter Funktionalität, nämlich ein in Figur 10 gargestelltes sogenanntes LED-Gerät 7C, beschränkt.

Nachfolgend ist auf eine blockschaltbildmäßige Erörterung der Vorrichtung-Elektronik 11, nachfolgend kurz die erste Elektronik 11 genannt, mit Hilfe der Figur 8 und einer ESL-Elektronik 13, nachfolgend kurz die zweite Elektronik 13 genannt, der ESLs 7A und 7B mit Hilfe der Figur 9 eingegangen.

In der Figur 8, welche das Blockschaltbild der ersten Elektronik 11 zeigt, sind neben den drei Leitungen L1 bis L3 auch die Endbereiche E4 bis E5 der Stahlbändert S1 bis S3, mit denen die Versorgungseinrichtung 4 die Leitungen L1 bis L3 kontaktiert, gekennzeichnet. Die erste Elektronik 11 weist eine Flash-Speichereinheit 14, eine Tasteneingabeeinheit 15, eine erste Indikatoreinheit 16 mit z.B. einer LED, eine Bluetooth-Low-Energy-Funkeinheit 17, insbesondere mit einer darauf abgestimmten Antenne (nicht dargestellt) und einen zentralen, ersten Mikrocontroller 18 auf, der Funktionalitäten oder Betriebsmodi der Versorgungseinrichtung 4 mit Hilfe einer in seinem Speicher gespeicherten Software, sobald diese Software abgearbeitet wird, ggf. in Kombination mit seiner Schaltungsperipherie, bereitstellt. Der erste Mikrocontroller 18 ist über seine Peripherie-Anschlüsse mit den Einheiten 14 bis 16 verbunden, um diese zu nutzen, anzusteuern oder auch abzufragen. Beispielhaft sei im Zusammenhang mit dem Mikrocontroller 18 auf einen Chip mit der Bezeichnung CSR 1021 der Firma Qualcomm Technologies, Inc. hingewiesen.

Die erste Elektronik 11 ist über ein Versorgungskabel 19 mit der intelligenten, wieder aufladbaren Batteriekonfiguration 6 verbunden, wobei in dem Versorgungskabel 19 einerseits ein Versorgungsleitungsstrang 19A zur elektrischen Energieversorgung und ein Datenleitungsstrang 19B zur Informationsübertragung integriert ist. Die Batteriekonfiguration 6 weist einen smarten Batterie-Controller 39 auf, der Nutzungsparameter und Zustandsparameter der Batteriekonfiguration 6 (ggf. auch Authentifikationsinformation) über einen I²C-Bus, der den Datenleitungsstrang 19B nutzt, dem zentralen Mikrocontroller 18 zur Verfügung stellt. Ebenfalls enthalten ist in dem Versorgungskabel 19 ein Potenzialleitungsstrang 19C zur Festlegung des Bezugspotentials GND.

Ein erster Spannungsregler 20 ist eingangsseitig an die Batteriekonfiguration 6 angeschlossen und erzeugt eine für den Betrieb der Versorgungseinrichtung 4 bestimmte interne Versorgungsspannung VCC2 (z.B. ca. 3,3 Volt). Dieser erste Spannungsregler 20 kann als "Low Dropouts" (abgekürzt als LDO) Regler realisiert sein.

Die erste Elektronik 11 weist auch einen zweiten Spannungsregler 21auf, welcher ebenfalls aus der Batteriekonfiguration 6 gespeist wird und für die Bereitstellung der Bussystem-Versorgungsspannung VCC1 (z.B. ca. 5 Volt) am Bussystem vorgesehen ist. Auch hierfür kann ein LDO-Regler zum Einsatz kommen. Der zweite Spannungsregler 21 ist auch mit dem Mikrocontroller 18 verbunden (siehe eine Leitung SC1 als Input für den Mikrocontroller 18 und eine Leitung SC2 als Output für den Mikrocontroller 18), um seinen Status abzufragen oder Einfluss auf sein Betriebsverhalten bzw. seinen Betriebszustand zu nehmen. Ausgangsseitig ist an den zweiten Spannungsregler 21 ein erster Pufferkondensator 22 angeschlossen.

Weiterhin weist die erste Elektronik 11 eine Überlast-Erkennungseinheit 23 (symbolisiert durch einen Operationsverstärker) auf, die zum Erkennen einer Überlastung der dritten Leitung L3 vorgesehen ist. Hier wird im Wesentlichen überprüft, dass der Ist-Wert der Spannung auf der dritten Leitung L3 nicht unter einen Limit-Wert absinkt. Um keine ungewollten Abschaltungen zu verursachen, kann diese Prüfung insbesondere im zeitlichen Kontext erfolgen, also zu gewissen Zeitpunkten bzw. in gewissen Zeitspannen durchgeführt werden und zu anderen Zeitpunkten oder Zeitspannen eben nicht durchgeführt werden, worauf jedoch in der hier präsentierten Darstellung als Blockschaltbild nicht weiter eingegangen ist.

Die Überlast-Erkennungseinheit 23 ist ausgangseitig mit einer Schaltstufe 24 verbunden, die zum Umschalten des Werts der Versorgungsspannung VCC1 des Bussystems zwischen dem durch den zweiten Spannungsregler erzeugten Soll-Wert der Bussystem-Versorgungsspannung VCC1 und dem Bezugspotential GND ausgebildet ist. Bei erkannter Überlastung wird die zweite Leitung L2 also durch die Schaltstufe 24 mit dem Bezugspotential GND verbunden.

Weiterhin ist der erste Mikrocontroller 18 mit seinem ersten Analog-Digital-Wandler Eingang ADC1, abgekürzt ADC-Eingang ADC1, mit der zweiten Leitung L2 verbunden, um das Signalniveau auf dieser Leitung L2 erfassen zu können.

Zwischen einem seriellen Sendeausgang TX und einem seriellen Empfangseingang RX des Mikrocontrollers 18 einerseits und der dritten Leitung L3 andererseits ist eine Fehlerschutzeinheit 25 vorgesehen, damit diese Anschlüsse TX und RX des Mikrocontrollers 18 vor unverträglichen Signalsituationen geschützt sind. Die Fehlerschutzeinheit 25 ist weiterhin so konfiguriert, dass sie es dem ersten Mikrocontroller 18 erlaubt, die Signalzustände bzw. Signalniveaus auf der dritten Leitung L3 mit Hilfe seines zweiten ADC-Eingangs ADC2 zu erfassen, was für die Erkennung der in der allgemeinen Beschreibung ausführlich erörterten schwachen (hochohmigen) Belastung der dritten Leitung L3 durch eines der Geräte 7A oder 7B nötig ist.

Der erste Mikrocontroller 18 ist weiterhin mit der Schaltstufe 24 verbunden, um sie mit Hilfe eines VCC-Steuersignals VCCS anzusteuern, um die in der allgemeinen Beschreibung ausführlich erörterte temporäre Veränderung der Versorgungsspannung VCC1 herbeizuführen, was bei der vorliegenden Schaltungsausführung durch eine temporäre Abschaltung der Bussystem-Versorgungsspannung VCC1 realisiert ist.

Weiterhin sei erwähnt, dass die schaltungstechnische Anbindung an die dritte Leitung L3 so erfolgen kann, dass zunächst ein Schutzschaltung vorgesehen ist, welche die erste Elektronik 11 vor Überspannung und vor elektrostatischer Entladung schützt. Weiterhin kann eine variable Bus-Pull-Up-Schaltung vorgesehen sein, die je nach Bedarf bzw. Betriebsmodus das Signalniveau der dritte Leitung L3 stärker oder schwächer (also nieder- oder hochohmiger) in Richtung der internen Versorgungsspannung VCC2 zieht. Sie ist durch den ersten Mikrocontrollers 18 steuerbar und wirkt zwischen der Schutzschaltung und den Kommunikationsanschlüssen TX, RX des ersten Mikrokontrollers 18. Das stärkere Hinziehen des Signalniveaus hin zu der interne Versorgungsspannung VCC2 kann durch einen Widerstand mit einem Wert in der Größenordnung von z.B. 5k Ohm realisiert sein und wird z.B. während des Niedriggeschwindigkeit-Kommunikationsvorgangs eingesetzt.

In der Figur 9, welche die zweite Elektronik 13 zeigt, sind neben den drei Leitungen L1 bis L3 auch die Endbereiche E1 bis E3 der Stahlbändert, mit denen das ESL 7A oder 7B die Leitungen L1 bis L3 kontaktiert, dargestellt. Die zweite Elektronik 13 weist eine zweite Indikatoreinheit 26 mit z.B. einer LED, eine E-Paper-Display-Einheit 27, eine NFC-Kommunikations-Einheit 28 und einen zentralen, zweiten Mikrocontroller 29 auf, der Funktionalitäten oder Betriebsmodi der Versorgungseinrichtung 4, auf die im Detail in der allgemeinen Beschreibung eingegangen wurde, mit Hilfe einer in seinem Speicher gespeicherten Software, sobald diese Software abgearbeitet wird, ggf. in Kombination mit seiner Schaltungsperipherie, bereitstellt. Der zweite Mikrocontroller 29 ist über seine Peripherie-Anschlüsse mit den Einheiten 26 bis 28 verbunden, um diese zu nutzen, anzusteuern oder auch abzufragen. Beispielhaft sei im Zusammenhang mit dem zweiten Mikrocontroller 29 auf einen Chip mit der Bezeichnung EFM32^{™} Pearl Gecko 32-bit Mikrocontroller der Firma Silicon Labs hingewiesen.

Die zweite Elektronik 13 weist einen dritten Spannungsregler 30 auf, der an die zweite Leitung L2 angeschlossen ist und welcher eine für den Betrieb des ESLs 7A bzw. 7B bestimmte interne Versorgungsspannung VCC3 (z.B. ca. 3,3 Volt) erzeugt. Auch dieser dritte Spannungsregler 30 kann als LDO-Regler ausgebildet sein. Eingangsseitig ist ein zweiter Pufferkondensator 31 und eine erste Diode 32 in Durchlassrichtung in Richtung hin zu dem dritten Spannungsregler 30 gepolt vorgesehen. Der zweite Pufferkondensator 31 sichert den Betrieb des dritten Spannungsreglers 30 in Zeiten, in denen die temporäre Veränderung der Bussystem-Versorgungsspannung VCC1 auftritt. Während solcher Zeitintervalle sorgt die erste Diode 32 auch dafür, dass sich der zweite Pufferkondensator 31 nicht in Richtung der zweiten Leitung L2 entladen kann. Der Kapazitätswert des zweiten Pufferkondensators 31 ist mit ausreichend Sicherheit an die zu überbrückende Zeitspanne bei bekanntem (maximalem) Leistungsbedarf der zweiten Elektronik 13 ausgelegt.

Weiterhin ist ein Interrupt-Eingang IRQ des zweiten Mikrocontrollers 29 über eine zweite Diode 33, die in Durchlassrichtung von dem Interrupt-Eingang IRQ hin zu der zweiten Leitung L2 gepolt ist, mit der zweiten Leitung L2 verbunden. Damit wird bei Vorliegen der temporären Veränderung des Werts der Bussystem-Versorgungsspannung VCC1, was durch ein kurzzeitiges (ca. 100 Mikrosekunden) Anliegen des Bezugspotentials GND auf der zweiten Leitung L2 manifestiert ist, ein Interrupt beim zweiten Mikrocontroller 29 ausgelöst, was zu einer Veränderung des gegenwärtigen Betriebsmodus hin zu einem Identifikation-Modus führt, wobei der Identifikation-Modus im Detail in der allgemeinen Beschreibung erörtert wurde. Im Mikrocontroller 29 verursacht das Auftreten des Interrupts die Ausführung einer dafür vorgesehen Software, mit deren Hilfe der Identifikation-Modus bereitgestellt wird.

Ein serieller Sendeausgang TX und ein serieller Empfangseingang RX des Mikrocontrollers 29 sind über einen hochohmiger Widerstand 34 (ca. 100 k Ohm) mit der dritten Leitung L3 verbunden. Damit lässt sich die in der allgemeinen Beschreibung im Detail erörterte hochohmige Belastung der dritten Leitung L3 im Verbindungsstart-Modus bewirken. Diese hochohmige Belastung etabliert ein typisches, jedoch von der Anzahl der belastenden Geräte abhängiges Signalniveau auf der dritten Leitung L3, welches von dem ersten Mikrocontroller 18 mit Hilfe seines zweiten ADC-Eingangs ADC2 erfasst und ausgewertet wird. Bevorzugt wird dieses Signalniveau so konzipiert, dass es sich von jenen Signalniveaus unterscheidet, die typischerweise im Zusammenhang mit logischen Zuständen - insbesondere während einer digitalen Datenkommunikation - auftretenden.

Eine zweite Diode 35, die den hochohmigen Widerstand 34 mit dem Ausgang des dritten Spannungsreglers 30 mit Durchlassrichtung in Richtung des dritten Spannungsreglers 30 verbindet, schütz den dritten Spannungsreglers 30 bei einem Kurzschluss, weil sie bei Eintreten des Kurzschlusses in Sperrrichtung gepolt ist. Weiterhin schützt sie in Kombination mit dem Widerstand 34 den dritten Spannungsregler 30 im Fall einer Überspannung auf der dritten Leitung L3, weil der Widerstand 34 strombegrenzend wirkt.

Weiterhin sei erwähnt, dass die schaltungstechnische Anbindung an die dritte Leitung L3 so erfolgen kann, dass zunächst eine Schutzschaltung vorgesehen ist, welche die zweite Elektronik 13 vor Überspannung und vor elektrostatischer Entladung schützt. Daran kann sich ein Kopplungsschaltung zur Bus-An- bzw. Ab-Schaltung anschließen, die es unter der Steuerung des zweiten Mikrocontrollers 29 erlaubt, die zweite Elektronik 13 von der dritten Leitung L3 elektronisch anzukoppeln oder von dieser zu trennen. Anstelle der vollständigen Trennung kann hier auch eine relativ hochohmige Verbindung bestehen bleiben. Weiterhin kann eine variable Bus-Pulldown-Schaltung vorgesehen sein, die je nach Bedarf bzw. Betriebsmodus das Signalniveau die dritte Leitung L3 entweder stärker oder schwächer (niederohmig oder hochohmig) in Richtung des Bezugspotentials zieht. Sie ist durch den zweiten Mikrocontrollers 29 steuerbar und zwischen die Schutzschaltung und Kopplungsschaltung angeschlossen. Die schwache Belastung kann durch einen Widerstand mit einem Wert in der Größenordnung von z.B. 100 k Ohm bis zu 1 M Ohm realisiert sein und wird z.B. während des Niedriggeschwindigkeit-Kommunikationsvorgang eingesetzt. Weiterhin kann eine Soft-Start-Schaltung vorgesehen sein, die sicherstellt, dass beim Einsetzen des Geräts (z.B. ESLs) in die Regalschiene 3 kein Kurzschluss zwischen der ersten Leitung L1 und der zweiten Leitung L2 verursacht wird. Sie begrenzt die initiale Stromaufnahme beim Einsetzen in die Regalschiene 3, weil zu diesem Zeitpunkt die internen Kondensatoren noch entladen sind.

In weiterer Folge ist in der Figur 10 ein relativ einfaches LED-Gerät 7C dargestellt und erörtert, welches eine dritte Elektronik 36 aufweist. Es ist im Wesentlichen durch ein bistabiles Flipflop 37 gebildet, das an seinem Ausgang Q eine Leuchtdiode 38 angeschlossen hat. Auch hier sorgt die Kombination aus der ersten Diode 32 und dem Pufferkondensator 31 dafür, die Zeitspanne der temporären Veränderung der Bussystem-Versorgungspannung VCC1 zu überbrücken. Dieses LED-Gerät 7C passt einen logischen Zustand des Ausgangs Q an den jeweils zum Zeitpunkt der Veränderung der Bussystem-Versorgungsspannung VCC1 vorliegenden logischen Zustand der dritten Leitung L3, welche mit dem Dateneingang D des Flipflops 37 verbunden ist, an. Dabei wirkt die temporäre Veränderung der Bussystem-VersorgungsspannungVCC1, die dem Flipflop 37 an seinem Takt-Eingang (auch Clock-Eingang bezeichnet) CLK zugeführt wird, als Takt für die Zustandsübernahme. Dieses LED-Gerät 7C lässt sich nicht explizit adressieren. Auch stellt es keine Identifikationsdaten bereit.

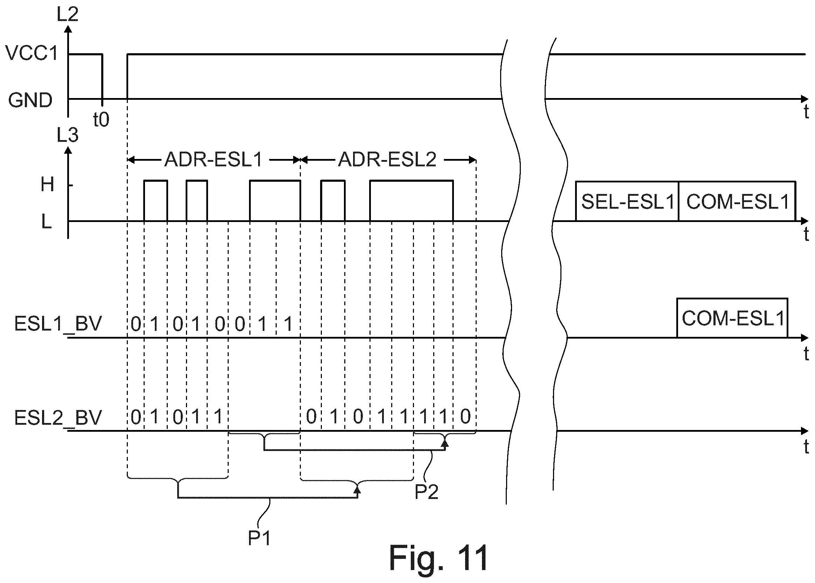

Mit Hilfe der Figur 11 ist das Zusammenwirken der Versorgungseinrichtung 4 mit den beiden ESLs 7A und 7B an dem Bussystem gemäß einem ersten Ausführungsbeispiel erörtert.

Die Figur 11 zeigt übereinander angeordnet vier zeitsynchrone Diagaramme. Das oberste Diagramm zeigt den Verlauf der Bussystem-Versorgungsspannung VCC1 über der Zeit t. Von oben nach unten gezählt zeigt das zweite Diagramm Signalzustände auf der dritten Leitung L3. Von oben nach unten gezählt zeigt das dritte Diagramm logische Symbole ESL1_BV, die das erste ESL 7A an die dritte Leitung L3 abgibt. Das unterste, vierte Diagramm zeigt logische Symbole ESL2_BV, die das zweite ESL 7B an die dritte Leitung L3 abgibt.

Zunächst sei angenommen, dass sich die ESLs 7A und 7B in einem Ruhe- bzw. Schlafzustand mit möglichst geringer Stromaufnahme befinden.

Beginnend mit dem Zeitpunkt t0 verursacht die Versorgungseinrichtung 4 eine temporäre Veränderung der Bussystem-Versorgungspannung VCC1 für ca. 100 Mikrosekunden, wobei während dieser Zeitpanne der Wert vom Soll-Wert von 5 Volt abweicht, konkret auf das Bezugspotential (GND, 0 Volt) gelegt ist. Spätestens mit Ende der Zeitspanne hat die Versorgungseinrichtung 4 ihren Erfassung-Modus eingenommen. Diese Veränderung der Bussystem-Versorgungsspannung VCC1 triggert den Interrupt bei dem zweiten Mikrocontrollern 29 der ESLs 7A und 7B, sodass diese in den Identifikation-Modus eintreten und im Niedriggeschwindigkeit-Kommunikationsvorgang mit Open-Drain-Anbindung an die dritte Leitung L3 beginnen, ihre Identifikationsdaten als Adress-Daten ADR-ESL1 und ADR-ESL2 gleichzeitig abzugeben. Wie aus dem Vergleich der logischen Symbole des dritten und des vierten Diagramms ersichtlich ist, können so beide ESLs 7A und 7B ihre ersten fünf logischen Symbole der Adress-Daten ADR-ESL1 und ADR-ESL2 angeben, weil sie durch Überwachung der dritten Leitung L3 feststellen, dass die zeitliche Folge der dort auftretenden Signalzustände zur zeitlichen Folge der von ihnen jeweils angegebenen logischen Symbole ESL1_BV und ESL2_BV passt. Die jeweiligen logischen Symbole ESL1_BV und ESL2_BV sind also bis zum fünften logischen Symbol identisch. Ab dem sechsten logischen Symbol stellt jedoch das zweite ESL 7B seine Aussendung ein, weil es durch Überwachung der dritten Leitung L3 feststellt, dass diese ein anders Symbol aufweist, als das eigene, nämlich ein bei Open-Drain-Ankopplung dominierendes Symbol (konkret "0" bzw. "low") des anderen ESLs 7A. Erst nachdem die Abgabe der Adress-Daten ADR-ESL1 durch das erste ESL 7A abgeschlossen wurde, beginnt das zweite ESL 7B neuerlich seine Adress-Daten ADR-ESL2 zu übermitteln, diesmal erfolgreich störungsfrei. Der Vorgang der verzögerten neuerlichen Übertragung der gesamten Adressdaten ADR-ESL2 des zweiten ESLs 7B ist durch die beiden Pfeile P1 und P2 angedeutet.

Danach wird eines der ESLs 7A oder 7B, im vorliegenden Fall das erste ESL 7A, im Niedriggeschwindigkeit-Kommunikationsvorgang durch die Versorgungseinrichtung 4 mit Hilfe eines Selektionsbefehls selektiert, also adressiert angesprochen, was in dem zweiten Diagramm in einer Selektionssequenz SEL-ESL1 visualisiert ist, und wechselt in den Individual-Kommunikationsmodus.

Das zweite ESL 7B wechselt wieder in seine Bussystem-Inaktivität bzw. den Ruhezustand-Modus, in dem es von der dritten Leitung L3 abgekoppelt ist, um Hochgeschwindigkeit-Kommunikationsvorgänge nicht zu stören.

Das erste ESL 7A kommuniziert nun mit Hilfe eines UART mit der Versorgungseirichtung 4 bidirektional im Hochgeschwindigkeit-Kommunikationsvorgang, was in dem zweiten und dritten Diagramm durch eine Kommunikationssequenz COM-ESL1 angedeutet ist, wobei im vorliegenden Fall z.B. Bilddaten an das ESL 7A übertragen werden und der Empfang bzw. die interne Verarbeitung quittiert wird.

Danach wechselt auch das erste ESL 7A wieder in den Ruhezustand-Modus.

Um Missverständnisse zu vermeiden sei noch erwähnt, dass im Unterschied zu den Sequenzen, in denen die Adressdaten ADR-ESL1 und ADR-ESL2 hinsichtlich ihrer logischen Symbole detailliert visualisiert sind, in der Visualisierung der Sequenzen SEL-ESL1 und COM-ESL1 nicht mehr individuell auf die innerhalb dieser Sequenzen übermittelten und auf der dritten Leitung L3 auftretenden logischen Symbole eingegangen ist.

Wie erwähnt kann eines der ESLs 7A oder 7B oder auch beiden gemeinsam die dritte Leitung L3 von sich aus hochohmig belasten, um einen Kommunikationsbedarf mit der Versorgungseinrichtung 4 zu signalisierten. In diesem Fall wechselt die Versorgungseirichtung 4 von ihrem Ruhezustand-Modus unter Auslassung der initialen temporären Veränderung der Bussystem-Versorgungsspannung VCC1 direkt in den Erfassung-Modus, in dem - wie in der Figur 11 visualisiert - die Adressdaten von einem oder von mehreren ESLs 7A oder 7B erfasst werden und nachfolgend eine gezielte Kommunikation mit nur einem selektieren ESL 7A oder 7B im Hochgeschwindigkeit-Kommunikationsvorgang durchgeführt wird. Hierbei kann es sich um den Statusbericht des ESLs 7A bzw. 7B zu einer im Hintergrund abgearbeiteten Aufgabe oder einer Eingabe eines Benutzers über eine Eingabeeinheit des ESLs 7A oder 7B oder eine Interaktion mit einem NFC-Device am ESL 7A oder 7B usw. handeln. All diese Vorkommnisse können ein am Bussystem angeschlossenes Gerät aus seinem Ruhezustand-Modus erwecken und einen Kommunikationsbedarf mit der Versorgungseinrichtung 4 auslösen, auf den das ESL 7A oder 7B in erörterter Weise reagiert.

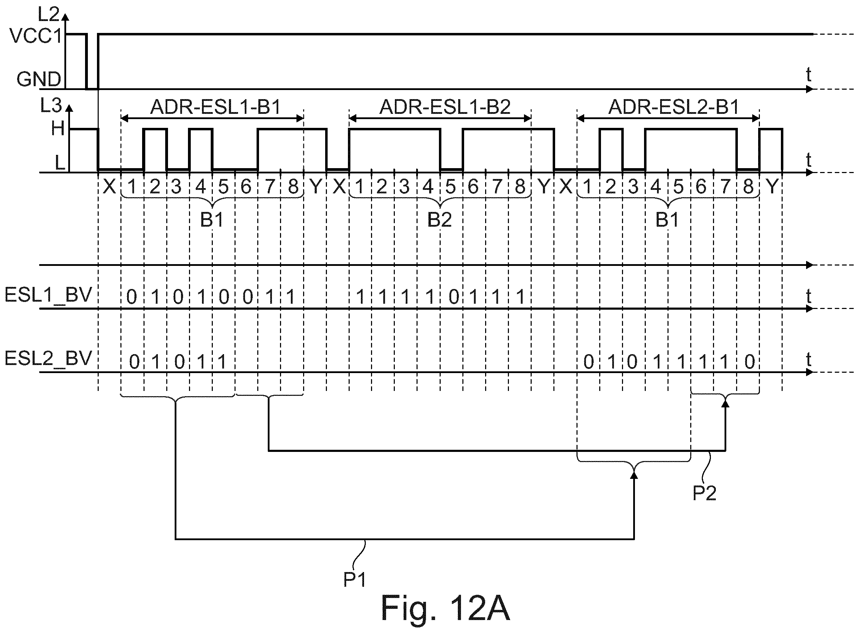

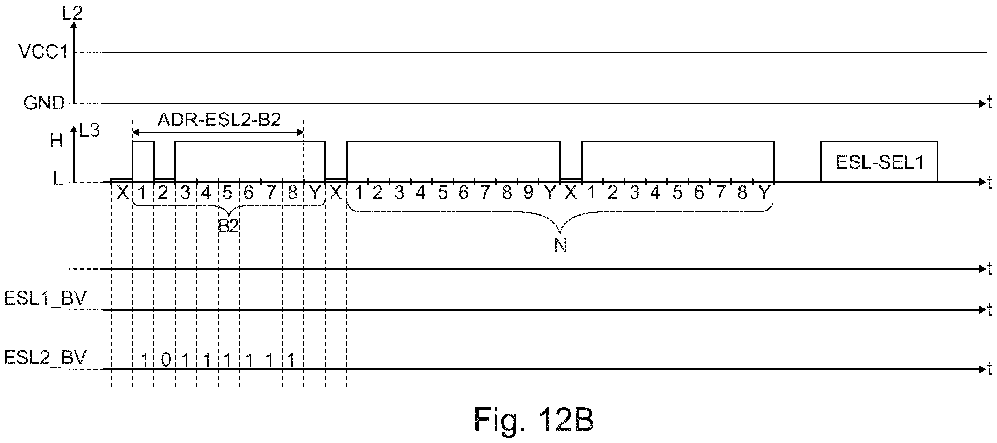

In den Figur 12A und 12B, die zeitlich zusammenhängende Signalzustände aufgeteilt auf zwei Figurenblätter zeigen, ist das Zusammenwirken der Versorgungseinrichtung 4 mit den beiden ESLs 7A und 7B an dem Bussystem gemäß einem zweiten Ausführungsbeispiel erörtert. In diesem Ausführungsbeispiel wird durch die Versorgungseinrichtung 4 einleitend zur Aussendung eines jeden Bytes der Identifikationsdaten ein Startbit X, hier mit dem logischen Wert "0" bzw. Signalzustand "Low", auf der dritten Leitung L3 abgegeben. Dies ist der Trigger für die ESLs 7A und 7B um ihre Bits des ersten Bytes der Identifikationsdaten gemäß der Vorgehensweise laut dem ersten Ausführungsbeispiel abzugeben, jedoch nach dem fünften Bit des ersten Bytes die Abgaben durch das zweite ESL 7B aus den im Zusammenhang mit der Figur 11 genannten Gründen zu beenden. Beendet wird die byteweise Abgabe durch die Versorgungseinrichtung 4, die ein Stoppbit Y, hier mit dem logischen Wert "1" bzw. Signalzustand "High", auf der dritten Leitung L3 abgibt.

Diese Sequenz aus einleitendem Startbit X durch die Versorgungseinrichtung 4, was als Synchronisationssignal oder Takt für alle am Bussystem angeschlossenen ESLs 7A und 7B wirkt, und darauffolgender byteweiser Abgabe der Identifikationsdaten durch zumindest eines der ESLs 7A oder 7B mit abschließendem Stoppbit Y nach jedem Byte kann gemäß einer vorab definierten bzw. spezifizierten Anzahl von Bytes (hier zur übersichtlicheren Erörterung zwei Stück, die als erste Byte B1 und zweites Byte B2 der jeweiligen Adressteilebytes ADR-ESL1-B1 und ADR-ESL1-B2 für das erste ESL 7A wie auch ADR-ESL2-B1 und ADR-ESL2-B2 für das zweite ESL 7B gekennzeichnet sind) wiederholt werden, bis eines der Geräte (hier das erste ESL 7A) seine vollständigen Identifikationsdaten angegeben hat. Danach wird dieser Vorgang für die Erfassung weitere Identifikationsdaten eines anderen Geräts (hier für das zweite ESL 7B) wiederholt und grundsätzlich so oft wiederholt, bis dass das alle am Bussystem angeschlossenen Geräte (hier ist dies das erste ESL 7A und das zweite ESL 7B) ihre Identifikationsdaten abgegeben haben.

Dabei ist konventionsgemäß verboten, dass die Identifikationsdaten nur durch Bits mit dem logischen Wert "1" bzw. Signalzustand "High" gebildet sind, weil die Versorgungseinrichtung 4 den Abschluss der Erfassung der Identifikationsdaten daran erkennt, dass währen einer Periode der im vorliegenden Fall zwei Bytes kein von dem logischen Wert "1" bzw. Signalzustand "High" abweichender Signalzustand zwischen dem jeweiligen Startbit X und Stoppbit Y feststellbar war. Dies ist in der Fig. 12B in der Sequenz N dargestellt. Dies bedeutet, dass bis einschließlich zum letzten Gerät (hier das zweite ESL 7B) alle Geräte (hier das erst und das zweite ESL 7A und 7B) bereits in den vorangehenden Erfassungszyklus ihre Identifikationsdaten abgeben haben.

Damit endet die Erfassung der Identifikationsdaten und die Versorgungseinrichtung 4 selektiert eines der Geräte 7A bzw. 7B per Selektionsbefehl durch Angabe der zutreffenden Geräte-Adresse, was in Analogie zu der Figur 11 als zeitlich letzter Eintrag in der Figur 12B durch ESL-SEL1 vermerkt ist. Wie zuvor im Zusammenhang mit Figur 11 erörtert, wechselt die Versorgungseinrichtung 4 und das selektierte Gerät (z.B. das erste Gerät 7A) in den Individual-Kommunikationsmodus, wohingegen das andere Gerät 7B wieder seine Bussystem-Inaktivität einnimmt bzw. in den Ruhezustand-Modus wechselt. Nach erfolgter Individual-Kommunikation gibt auch das erste ESL 7A die dritte Leitung L3 frei und wechselt in den Ruhezustand-Modus.

Es wird abschließend noch einmal darauf hingewiesen, dass es sich bei den vorangehend detailliert beschriebenen Figuren nur um Ausführungsbeispiele handelt, welche vom Fachmann in verschiedenster Weise modifiziert werden können, ohne den Bereich der Erfindung zu verlassen. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können.
Bevorzugte Ausführungsformen der Erfindung sind in den folgenden Gegenständen (genannt Items) aufgeführt:
Item 1. Bussystem, insbesondere Regalschienen-Bussystem, das aufweist:
   - eine erste Leitung (L1) zur Festlegung eines elektrischen Bezugspotentials (GND),
   - eine zweite Leitung (L2) zur Bereitstellung einer Versorgungsspannung (VCC1) mit einem Soll-Wert gegenüber dem Bezugspotential (GND),
   - zumindest eine dritte Leitung (L3), bevorzugt eine einzige dritte Leitung (L3), zur Kommunikation von Signalen und/oder Daten,
   - eine Versorgungseinrichtung (4), die mit den Leitungen (L1, L2, L3) elektrisch leitend verbunden ist und zur elektrischen Leistungs-Versorgung wie auch zur Kommunikations-Versorgung von elektronischen Geräten (7A, 7B, 7C), die an das Bussystem anschließbar sind, ausgebildet ist,
   wobei die Versorgungseinrichtung (4) dazu ausgebildet ist, unterschiedliche Gerätearten sowohl mit elektrischer Leistung als auch nach ihrer Identifikation geräteartspezifisch kommunikationstechnisch zu versorgen.
Item 2. Bussystem nach Item 1, wobei die Versorgungseinrichtung (4) zur temporären Veränderung der Versorgungspannung (VCC1) ausgebildet ist, um eine Veränderung eines Betriebsmodus einzuleiten.
Item 3. Bussystem nach Item 2, wobei die Versorgungseinrichtung (4) zur Veränderung der Versorgungsspannung (VCC1) gemäß einer vordefinierten Signalform ausgebildet ist.
Item 4. Bussystem nach Item 3, wobei die vordefinierte erste Signalform der Versorgungsspannung durch zumindest einen Parameter, der nachfolgend angeführten Gruppe definiert ist, nämlich:
   a) eine fallende Flanke, insbesondere mit definiertem Verlauf der fallenden Flanke, bevorzugt mit einem Wert der Steigung der fallenden Flanke innerhalb eines definierten Wertebereichs, besonders bevorzugt mit einem definierten Spannungswertunterschied,
   b) eine steigende Flanke, insbesondere mit definiertem Verlauf der steigenden Flanke, bevorzugt mit einem Wert der Steigung der steigenden Flanke innerhalb eines definierten Wertebereichs, besonders bevorzugt mit einem definierten Spannungswertunterschied,
   c) einen während einer Zeitspanne vorliegenden Spannungswert, der sich von dem Soll-Wert der Versorgungsspannung unterscheidet, bevorzugt mit einem niedrigeren Wert als der Wert der Versorgungsspannung, mehr bevorzugt mit einem dem digitalen Low-Zustand entsprechendem Wert, besonders bevorzugt einem dem Bezugspotential (GND) entsprechenden Wert.
Item 5. Bussystem nach einem der vorangehenden Items 2 - 4, wobei die temporäre Veränderung der Versorgungsspannung, insbesondere die Dauer zwischen dem Start der Veränderung und der Wiederherstellung der Versorgungsspannung (VCC1) mit dem Soll-Wert gegenüber dem Bezugspotential (GND) Versorgungsspannung, weniger als 500 µs dauert, bevorzugt weniger als 250 µs dauert, besonders bevorzugt in der Größenordnung von 100 µs dauert.
Item 6. Bussystem nach einem der vorangehenden Items 2 - 5, wobei die Versorgungseinrichtung (4) zwecks Verändern der Versorgungsspannung derart konfiguriert ist, dass sie aufweist:
   - eine erste Spannungserzeugungsstufe 21), die zur Erzeugung der Versorgungsspannung (VCC1) mit dem Soll-Wert und zur Abgabe der Versorgungsspannung (VCC1) an ihrem Ausgang ausgebildet ist,
   - eine durch ein Steuersignal (VCCS) ansteuerbare Schaltstufe (24), die dazu ausgebildet ist, in Abhängigkeit von dem Steuersignal (VCCS) wechselweise entweder die zweite Leitung (L2) mit der ersten Leitung (L1) oder die zweite Leitung (L2) mit dem Ausgang der Spannungserzeugungsstufe (24) zu verbinden,
   - einen Mikrocontroller (18), der mit einem seiner Ausgänge mit der Schaltstufe (24) verbunden ist und der zur Abgabe des Steuersignals (VCCS) an die Schaltstufe (24) konfiguriert ist.
Item 7. Bussystem nach einem der vorangehenden Items, wobei die Versorgungseinrichtung (4) einen Erfassung-Modus aufweist, in dem die Versorgungseinrichtung (4) zum Erfassen von Identifikationsdaten, die ein mit dem Bussystem verbundenes elektronisches Gerät (7A, 7B) eindeutig identifizieren, von einem oder mehreren mit den Leitungen (L1, L2, L3) verbundenen elektronischen Geräten (7A, 7B) ausgebildet ist, und die Versorgungseinrichtung (4) zwecks Einleitung der Veränderung ihres Betriebsmodus zum Einnehmen des Erfassung-Modus ausgebildet ist.
Item 8. Bussystem nach Item 7, wobei die Versorgungseinrichtung (4) dazu konfiguriert ist, so lange im Erfassung-Modus zu verharren und Identifikationsdaten zu empfangen, bis dass keine weiteren Identifikationsdaten mehr empfangen werden.
Item 9. Bussystem nach einem der vorangehenden Items 7 bis 8, wobei die Versorgungseinrichtung (4) in dem Erfassung-Modus zum Empfang der Identifikationsdaten in einem Niedriggeschwindigkeit-Kommunikationsvorgang konfiguriert ist, insbesondere mit einer Symbolrate pro Sekunde von bis zu 100k Boud.
Item 10. Bussystem nach einem der Items 7 bis 9, wobei die Versorgungsvorrichtung (4) in dem Erfassung-Modus dazu konfiguriert ist, ein einziges Gerät (7A, 7B), von dem Identifikationsdaten erfasst wurden, zu selektieren, um im Bussystem weiter aktiv zu bleiben.
Item 11. Bussystem nach einem der vorangehenden Items, wobei die Versorgungseinrichtung (4) einen Individual-Kommunikationsmodus aufweist, in dem die Versorgungseinrichtung (4) zum bidirektionalen Kommunizieren mit einem einzigen selektierten Gerät (7A, 7B) in einem Hochgeschwindigkeit-Kommunikationsvorgang, bevorzugt mit einer Symbolrate pro Sekunde von mehr als 100k Boud, besonders bevorzugt in der Größenordnung von 1000k Boud, konfiguriert ist und die Versorgungseinrichtung (4) nach erfolgter Selektion eines einzigen Geräts (7A, 7B) zum Wechseln von dem Erfassung-Modus in den Individual-Kommunikationsmodus ausgebildet ist.
Item 12. Bussystem nach Item 11, wobei die Versorgungseinrichtung (4) eine Datenstruktur speichert, in der geräte- oder geräteartspezifische Parameter gespeichert sind, und die Versorgungseinrichtung (4) dazu konfiguriert ist, unter Zuhilfenahme der Datenstruktur den Hochgeschwindigkeit-Kommunikationsvorgang gemäß einem geräte- oder geräteartspezifischen Kommunikationsprotokoll und/oder Befehlsset mit dem einzigen selektierten Gerät (7A, 7B) durchzuführen.
Item 13. Bussystem nach einem der vorangehenden Items, wobei die Versorgungseinrichtung (4) dazu ausgebildet ist, eine temporäre, im Wesentlichen hochohmige, Belastung der einen dritten Leitung (L3) durch ein an das Bussystem angeschlossenes Gerät (7A, 7B) zu erkennen, bevorzugt auch zu unterscheiden, wie viele angeschlossene Geräte (7A, 7B) gleichzeitig die Belastung erzeugen, und als Folge des Erkennens der Belastung zum Einnehmen seines Betriebsmodi gemäß den Items 7 bis 12 konfiguriert ist. Item 14. Bussystem nach einem der vorangehenden Items, wobei die Versorgungseinrichtung (4) zwecks ihrer elektrischen Versorgung mit einem externen Energiespeicher (6) gekoppelt ist, wobei es sich bei dem externen Energiespeicher bevorzugt um einen "smarten Energiespeicher" handelt, und die Versorgungseinrichtung (4) dazu ausgebildet ist, über eine Daten- bzw. Signalleitung von dem externen Energiespeicher (6) Informationen betreffend die Energiespeicherart und/oder die elektrische Speicherkapazität und/oder die Nutzungshistorie und/oder den Energieversorgungsstatus zu erhalten und zu verarbeiten.
Item 15. Bussystem nach einem der vorangehenden Items, wobei die Versorgungseinrichtung (4) zwecks ihrer elektrischen Versorgung mit einem externen Energiespeicher (6) gekoppelt ist, wobei der externe Energiespeicher ein Sicherheitselement, bevorzugt realisiert durch einen Security-Chip, aufweist, mit dessen Hilfe der externe Energiespeicher gegenüber der Versorgungseinrichtung authentifizierbar ist.
Item 16. Elektronisches Gerät (7A, 7B, 7C), welches Gerät (7A, 7B, 7C) ein Bus-Interface aufweist, das zur Verbindung mit Leitungen eines Bussystems ausgebildet ist, wobei
   das Bussystem aufweist:
      - eine erste Leitung (L1) zur Festlegung eines elektrischen Bezugspotentials (GND),
      - eine zweite Leitung (L2) zur Bereitstellung einer Versorgungsspannung (VCC1) gegenüber dem Bezugspotential (GND),
      - zumindest eine dritte Leitung (L3), bevorzugt eine einzige dritte Leitung (L3), zur Kommunikation von Signalen und/oder Daten,
      - eine Versorgungseinrichtung (4), die mit den Leitungen (L1, L2, L3) elektrisch leitend verbunden ist und zur elektrischen Leistungs-Versorgung wie auch zur Kommunikations-Versorgung von elektronischen Geräten (7A, 7B, 7C), die an das Bussystem anschließbar sind, ausgebildet ist,
   wobei das Gerät (7A, 7B, 7C) zu seiner Identifikation gegenüber der Versorgungseinrichtung (4) zwecks nachfolgender geräteartspezifischer Kommunikation mit der Versorgungseinrichtung ausgebildet ist.
Item 17. Gerät (7A, 7B, 7C) nach Item 16,
   - das eine Detektionsstufe (29; 37) aufweist, die zur Detektion einer temporären Veränderung der Versorgungsspannung ausgebildet ist und wobei
   - das Gerät (7A, 7B, 7C) bei einer solchen Detektion zum Verändern seines Betriebsmodus ausgebildet ist.
Item 18. Gerät (7A, 7B, 7C) nach Item 16, wobei die Detektionsstufe (29; 37) zur Detektion einer vordefinierten Signalform der Versorgungsspannung (VCC1) ausgebildet ist.
Item 19. Gerät (7A, 7B) nach einem der vorangehenden Items 16 bis 18, wobei das Gerät (7A, 7B) einen Mikrocontroller (29) aufweist und die Detektionsstufe mit Hilfe des Mikrocontrollers (29) realisiert ist, wobei bei dem Mikrocontroller (29) ein Interrupt-Eingang (IRQ) des Mikrocontrollers (29) genutzt wird, um die vordefinierte Signalform zu detektieren, wobei der Interrupt-Eingang (IRQ) des Mikrocontrollers (29) mit der zweiten Leitung (L2) verbunden ist und wobei das Vorliegen der vordefinierten Signalform den Interrupt des Mikrocontrollers (29) auslöst, was den Betriebsmodus des Geräts verändert.
Item 20. Gerät (7A, 7B) nach einem der vorangehenden Items, wobei das Gerät (7A, 7B)
   - eine zweite Spannungserzeugungseinrichtung (30) aufweist, die zum Empfang der Versorgungsspannung (VCC1) über die zweite Leitung (L2) des Bussystems und unter Ausnutzung dieser Versorgungsspannung (VCC1) zur Erzeuge einer geräteinternen Gerät-Versorgungsspannung (VCC3) konfiguriert ist, wobei
   - die zweite Spannungsversorgungseinrichtung (30) eingangsseitig mit einem Pufferkondensator (31) gegen die temporäre Veränderung der Versorgungsspannung abgesichert ist, wobei
   - der Pufferkondensator (31) mit einer Diode (32), die zur direkten Verbindung mit der zweiten Leitung (L2) zwecks Zuleitung der Versorgungsspannung vorgesehen ist und in Durchlassrichtung hin zu dem Pufferkondensator (31) gepolt ist, gegen eine Entladung des Pufferkondensators (31) hin zur zweiten Leitung (L2) abgesichert ist.
Item 21. Gerät (7A, 7B) nach einem der vorangehenden Items, wobei
   - das Gerät (7A, 7B) Identifikationsdaten (ADR-ESL1), ADR-ESL2) aufweist, die zur eindeutigen Identifikation des Gerätes (7A, 7B) dienen, und wobei
   - das Gerät (7A, 7B) einen Identifikation-Modus aufweist, in dem das Gerät 87A, 7B) zur Abgabe der Identifikationsdaten (ADR-ESL1), ADR-ESL2) über die zumindest eine dritte Leitung (L3) konfiguriert ist, und wobei
   - das Gerät (7A, 7B) zwecks Veränderung seines Betriebsmodus zum Einnehmen des Identifikation-Modus ausgebildet ist.
Item 22. Gerät (7A, 7B) nach Item 21, wobei das Gerät (7A, 7B) in dem Identifikation-Modus dazu konfiguriert ist, seine Identifikationsdaten (ADR-ESL1), ADR-ESL2) solange abzugeben, ggf. auch die Abgabe zu wiederholen, bis die Identifikationsdaten (ADR-ESL1, ADR-ESL2) vollständig störungsfrei abgeben werden konnten.
Item 23. Gerät (7A, 7B) nach Item 21 - 22, wobei
   - das Gerät (7A, 7B) in dem Identifikation-Modus eine Open-Drain-Verbindung mit der zumindest einen dritten Leitung (L3) für die Abgabe der Identifikationsdaten (ADR-ESL1), ADR-ESL2) aufweist.
Item 24. Gerät (7A, 7B) nach Item 21 - 23, wobei das Gerät (7A, 7B) in dem Identifikation-Modus dazu konfiguriert ist, gleichzeitig mit dem Abgeben der Identifikationsdaten (ADR-ESL1), ADR-ESL2) zu prüfen, ob die auf der zumindest einen dritten Leitung (L3) auftretende Signalfolge zu der Folge der logischen Zustände korrespondiert, durch die die Identifikationsdaten (ADR-ESL1), ADR-ESL2) definiert sind, und sobald eine Abweichung zwischen dem aktuellen Signalzustand der zumindest einen dritten Leitung (L3) und dem aktuellen logischen Zustand auftritt, die Abgaben der Identifikationsdaten (ADR-ESL1), ADR-ESL2) abzubrechen und erst dann wieder erneut zu starten, wenn die zumindest eine dritte Leitung (L3) als frei für die neuerliche Abgange der Identifikationsdaten (ADR-ESL1), ADR-ESL2) erkannt wird. Item 25. Gerät (7A, 7B) nach einem der Items 21 bis 24, wobei das Gerät (7A, 7B) in dem Identifikation-Modus zur Abgabe der Identifikationsdaten in einem Niedriggeschwindigkeit-Kommunikationsvorgang konfiguriert ist, insbesondere mit einer Symbolrate pro Sekunde bis zu 100k Boud.
Item 26. Gerät (7A, 7B) nach einem der Items 21 bis 25, wobei das Gerät (7a, 7B) in dem Identifikationsmodus dazu konfiguriert ist, nach Abgabe seiner Identifikationsdaten (ADR-ESL1), ADR-ESL2) zu prüfen, ob es seine Bussystem-Inaktivität einzunehmen hat oder ob es von der Versorgungseinrichtung (4) selektiert wurde, um im Bussystem weiter aktiv zu bleiben hat.
Item 27. Gerät (7A, 7B) nach einem der Items 21 - 26, das einen Individual-Kommunikationsmodus aufweist, in dem das Gerät (7A, 7B) für eine individuelle Kommunikation mit der Versorgungseinrichtung (4) konfiguriert ist, wobei das Gerät (7A, 7B) dazu ausgebildet ist, bei festgestellter Selektion den Identifikationsmodus zu verlassen und den Individual-Kommunikationsmodus einzunehmen.
Item 28. Gerät (7A, 7B) nach Item 27, wobei das Gerät (7A, 7B) in dem Individual-Kommunikationsmodus zum bidirektionalen Kommunizieren mit der Versorgungseinrichtung (4) in einem Hochgeschwindigkeit-Kommunikationsvorgang, bevorzugt mit einer Symbolrate pro Sekunde von mehr als 100k Boud, besonders bevorzugt in der Größenordnung von 1000k Boud, konfiguriert ist.
Item 29. Gerät (7A, 7B) nach einem der vorangehenden Items 28, wobei das Gerät (7A, 7B) dazu konfiguriert ist, den Hochgeschwindigkeit-Kommunikationsvorgang gemäß einem geräte- oder geräteartspezifischen Kommunikationsprotokoll und/oder Befehlsset durchzuführen.
Item 30. Gerät (7A, 7B) nach einem der vorangehenden Items 16 bis 29, wobei das Gerät (7A, 7B) einen Bussystem-Inaktivitätsmodus aufweist, in dem das Gerät (7A, 7B) eine Bussystem-Inaktivität einnimmt, wobei es mit Hilfe der ersten und der zweiten Leitung (L1, L2) elektrisch versorgbar ist, jedoch elektronisch von der zumindest einen dritten Leitung (L3) getrennt ist, und das Gerät derart ausgebildet ist, dass, wenn kein Kommunikationsbedarf vorliegt, der Bussystem-Inaktivitätsmodus eingenommen wird.
Item 31. Gerät (7A, 7B) nach einem der vorangehenden Items 16 bis 30, wobei das Gerät (7A, 7B) einen Verbindungsstart-Modus aufweist, in dem das Gerät (7A, 7B) dazu konfiguriert ist, durch die temporäre Herstellung einer, bevorzugt hochohmigen, Belastung der zumindest einen dritten Leitung (L1, L2, L3) der Versorgungseinrichtung (4) seinen Bedarf eines Verbindungsaufbaus anzuzeigen.
Item 32. Gerät (7A, 7B) nach Item 31, wobei das Gerät (7A, 7B) im Anschluss an den Verbindungsstart-Modus, zum Einnehmen seiner Betriebsmodi gemäß den Items 21 bis 30 konfiguriert ist.
Item 33. Gerät nach einem der vorangehenden Items 16 bis 32, wobei das Gerät ein Sicherheitselement aufweist, mit dessen Hilfe es gegenüber der Versorgungseinrichtung authentifizierbar ist, bevorzugt realisiert durch einen Security-Chip.
Item 34. Tragevorrichtung (3), bevorzugt Regalschiene, die ein Bussystem gemäß einem der vorangehenden Items 1 bis 13 aufweist.

## Patentansprüche

1. Bussystem, insbesondere Regalschienen-Bussystem, das aufweist:
- eine erste Leitung (L1) zur Festlegung eines elektrischen Bezugspotentials (GND),
- eine zweite Leitung (L2) zur Bereitstellung einer Versorgungsspannung (VCC1) mit einem Soll-Wert gegenüber dem Bezugspotential (GND),
- zumindest eine dritte Leitung (L3), bevorzugt eine einzige dritte Leitung (L3), zur Kommunikation von Signalen und/oder Daten,
- eine Versorgungseinrichtung (4), die mit den Leitungen (L1, L2, L3) elektrisch leitend verbunden ist und zur elektrischen Leistungs-Versorgung wie auch zur Kommunikations-Versorgung von elektronischen Geräten (7A, 7B, 7C), die an das Bussystem anschließbar sind, ausgebildet ist,
wobei die Versorgungseinrichtung (4) zur temporären Veränderung der Versorgungspannung (VCC1) ausgebildet ist, um eine Veränderung eines Betriebsmodus einzuleiten.

2. Bussystem nach Anspruch 1, wobei die Versorgungseinrichtung (4) dazu ausgebildet ist, unterschiedliche Gerätearten sowohl mit elektrischer Leistung als auch nach ihrer Identifikation geräteartspezifisch kommunikationstechnisch zu versorgen.

3. Bussystem nach Anspruch 1, wobei die Versorgungseinrichtung (4) zur Veränderung der Versorgungsspannung (VCC1) gemäß einer vordefinierten Signalform ausgebildet ist.

4. Bussystem nach Anspruch 3, wobei die vordefinierte erste Signalform der Versorgungsspannung durch zumindest einen Parameter, der nachfolgend angeführten Gruppe definiert ist, nämlich:
a) eine fallende Flanke, insbesondere mit definiertem Verlauf der fallenden Flanke, bevorzugt mit einem Wert der Steigung der fallenden Flanke innerhalb eines definierten Wertebereichs, besonders bevorzugt mit einem definierten Spannungswertunterschied,
b) eine steigende Flanke, insbesondere mit definiertem Verlauf der steigenden Flanke, bevorzugt mit einem Wert der Steigung der steigenden Flanke innerhalb eines definierten Wertebereichs, besonders bevorzugt mit einem definierten Spannungswertunterschied,
c) einen während einer Zeitspanne vorliegenden Spannungswert, der sich von dem Soll-Wert der Versorgungsspannung unterscheidet, bevorzugt mit einem niedrigeren Wert als der Wert der Versorgungsspannung, mehr bevorzugt mit einem dem digitalen Low-Zustand entsprechendem Wert, besonders bevorzugt einem dem Bezugspotential (GND) entsprechenden Wert.

5. Bussystem nach einem der vorangehenden Ansprüche, wobei die Versorgungseinrichtung (4) einen Erfassung-Modus aufweist, in dem die Versorgungseinrichtung (4) zum Erfassen von Identifikationsdaten, die ein mit dem Bussystem verbundenes elektronisches Gerät (7A, 7B) eindeutig identifizieren, von einem oder mehreren mit den Leitungen (L1, L2, L3) verbundenen elektronischen Geräten (7A, 7B) ausgebildet ist, und die Versorgungseinrichtung (4) zwecks Einleitung der Veränderung ihres Betriebsmodus zum Einnehmen des Erfassung-Modus ausgebildet ist.

6. Bussystem nach Anspruch 5, wobei die Versorgungseinrichtung (4) dazu konfiguriert ist, so lange im Erfassung-Modus zu verharren und Identifikationsdaten zu empfangen, bis dass keine weiteren Identifikationsdaten mehr empfangen werden.

7. Bussystem nach einem der vorangehenden Ansprüche 5 bis 6, wobei die Versorgungseinrichtung (4) in dem Erfassung-Modus zum Empfang der Identifikationsdaten in einem Niedriggeschwindigkeit-Kommunikationsvorgang konfiguriert ist, insbesondere mit einer Symbolrate pro Sekunde von bis zu 100k Boud.

8. Bussystem nach einem der Ansprüche 5 bis 7, wobei die Versorgungsvorrichtung (4) in dem Erfassung-Modus dazu konfiguriert ist, ein einziges Gerät (7A, 7B), von dem Identifikationsdaten erfasst wurden, zu selektieren, um im Bussystem weiter aktiv zu bleiben.

9. Elektronisches Gerät (7A, 7B, 7C), welches Gerät (7A, 7B, 7C) ein Bus-Interface aufweist, das zur Verbindung mit Leitungen eines Bussystems ausgebildet ist, wobei
das Bussystem aufweist:
- eine erste Leitung (L1) zur Festlegung eines elektrischen Bezugspotentials (GND),
- eine zweite Leitung (L2) zur Bereitstellung einer Versorgungsspannung (VCC1) gegenüber dem Bezugspotential (GND),
- zumindest eine dritte Leitung (L3), bevorzugt eine einzige dritte Leitung (L3), zur Kommunikation von Signalen und/oder Daten,
- eine Versorgungseinrichtung (4), die mit den Leitungen (L1, L2, L3) elektrisch leitend verbunden ist und zur elektrischen Leistungs-Versorgung wie auch zur Kommunikations-Versorgung von elektronischen Geräten (7A, 7B, 7C), die an das Bussystem anschließbar sind, ausgebildet ist,
wobei das Gerät (7A, 7B, 7C) eine Detektionsstufe (29; 37) aufweist, die zur Detektion einer temporären Veränderung der Versorgungsspannung ausgebildet ist und bei einer solchen Detektion zum Verändern seines Betriebsmodus ausgebildet ist.

10. Gerät (7A, 7B, 7C) nach Anspruch 9, wobei die Detektionsstufe (29; 37) zur Detektion einer vordefinierten Signalform der Versorgungsspannung (VCC1) ausgebildet ist.

11. Gerät (7A, 7B) nach einem der vorangehenden Ansprüche 9 bis 10, wobei das Gerät (7A, 7B) einen Mikrocontroller (29) aufweist und die Detektionsstufe mit Hilfe des Mikrocontrollers (29) realisiert ist, wobei bei dem Mikrocontroller (29) ein Interrupt-Eingang (IRQ) des Mikrocontrollers (29) genutzt wird, um die vordefinierte Signalform zu detektieren, wobei der Interrupt-Eingang (IRQ) des Mikrocontrollers (29) mit der zweiten Leitung (L2) verbunden ist und wobei das Vorliegen der vordefinierten Signalform den Interrupt des Mikrocontrollers (29) auslöst, was den Betriebsmodus des Geräts verändert.

12. Gerät (7A, 7B) nach einem der vorangehenden Ansprüche 9 bis 11, wobei das Gerät (7A, 7B)
- eine zweite Spannungserzeugungseinrichtung (30) aufweist, die zum Empfang der Versorgungsspannung (VCC1) über die zweite Leitung (L2) des Bussystems und unter Ausnutzung dieser Versorgungsspannung (VCC1) zur Erzeuge einer geräteinternen Gerät-Versorgungsspannung (VCC3) konfiguriert ist, wobei
- die zweite Spannungsversorgungseinrichtung (30) eingangsseitig mit einem Pufferkondensator (31) gegen die temporäre Veränderung der Versorgungsspannung abgesichert ist, wobei
- der Pufferkondensator (31) mit einer Diode (32), die zur direkten Verbindung mit der zweiten Leitung (L2) zwecks Zuleitung der Versorgungsspannung vorgesehen ist und in Durchlassrichtung hin zu dem Pufferkondensator (31) gepolt ist, gegen eine Entladung des Pufferkondensators (31) hin zur zweiten Leitung (L2) abgesichert ist.

13. Gerät (7A, 7B) nach einem der Ansprüche 9 bis 12, wobei
- das Gerät (7A, 7B) Identifikationsdaten (ADR-ESL1), ADR-ESL2) aufweist, die zur eindeutigen Identifikation des Gerätes (7A, 7B) dienen, und wobei
- das Gerät (7A, 7B) einen Identifikation-Modus aufweist, in dem das Gerät 87A, 7B) zur Abgabe der Identifikationsdaten (ADR-ESL1), ADR-ESL2) über die zumindest eine dritte Leitung (L3) konfiguriert ist, und wobei
- das Gerät (7A, 7B) zwecks Veränderung seines Betriebsmodus zum Einnehmen des Identifikation-Modus ausgebildet ist.

14. Gerät (7A, 7B) nach Anspruch 13, wobei das Gerät (7A, 7B) in dem Identifikation-Modus dazu konfiguriert ist, seine Identifikationsdaten (ADR-ESL1), ADR-ESL2) solange abzugeben, ggf. auch die Abgabe zu wiederholen, bis die Identifikationsdaten (ADR-ESL1, ADR-ESL2) vollständig störungsfrei abgeben werden konnten.

15. Tragevorrichtung (3), bevorzugt Regalschiene, die ein Bussystem gemäß einem der vorangehenden Ansprüche 1 bis 8 aufweist.
